(19) Europäisches Patentamt
European Patent Office
Office européen des brevets

(11) **EP 1 976 103 B1**

(12) **EUROPÄISCHE PATENTSCHRIFT**

(45) Veröffentlichungstag und Bekanntmachung des Hinweises auf die Patenterteilung:
**07.08.2013 Patentblatt 2013/32**

(51) Int Cl.:
*H02M 3/155* (2006.01)   *H02M 7/217* (2006.01)
*H02M 7/538* (2007.01)   *H02M 7/797* (2006.01)
*H02M 5/458* (2006.01)

(21) Anmeldenummer: **08000643.0**

(22) Anmeldetag: **15.01.2008**

(54) **Weich schaltende Umrichterschaltung und Verfahren zu ihrer Steuerung**

Soft switching converter and method for its operation

Convertisseur à commutation douce et procédé de son commande

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.01.2007 DE 102007002874**

(43) Veröffentlichungstag der Anmeldung:
**01.10.2008 Patentblatt 2008/40**

(73) Patentinhaber: **Forschungsgemeinschaft für Leistungselektronik und Elektrische Antriebe e. V.**
**52066 Aachen (DE)**

(72) Erfinder:
• **Rigbers, Klaus**
**D-52070 Aachen (DE)**
• **De Doncker, Rik W. A. A.**
**B-3000 Leuven (BE)**

(74) Vertreter: **Jostarndt, Hans-Dieter et al**
**Jostarndt Patentanwalts-AG**
**Brüsseler Ring 51**
**52074 Aachen (DE)**

(56) Entgegenhaltungen:
• **DE DONCKER R W ET AL: "The auxiliary resonant commutated pole converter", CONFERENCE RECORD OF THE INDUSTRY APPLICATIONS SOCIETY ANNUAL MEETING. SEATTLE, OCT. 7 - 12, 1990; [CONFERENCE RECORD OF THE INDUSTRY APPLICATIONS SOCIETY ANNUAL MEETING], NEW YORK, IEEE, US, Bd. MEETING 25, 7. Oktober 1990 (1990-10-07), Seiten 1228-1235, XP010034859, DOI: DOI:10.1109/IAS. 1990.152341 ISBN: 978-0-87942-553-1**
• **DAWIDZIUK J ET AL: "An analysis and experimental studies of auxiliary resonant commutated pole inverters", INDUSTRIAL ELECTRONICS, 1993. CONFERENCE PROCEEDINGS, ISIE'93 - BUDAPE ST., IEEE INTERNATIONAL SYMPOSIUM ON BUDAPEST, HUNGARY 1-3 JUNE 1993, NEW YORK, NY, USA, IEEE, US, 1. Juni 1993 (1993-06-01), Seiten 780-785, XP010068688, DOI: DOI:10.1109/ISIE. 1993.268706 ISBN: 978-0-7803-1227-2**

## Beschreibung

### Technisches Gebiet

Die Erfindung betrifft eine Schaltungsanordnung zum Umsetzen wenigstens einer Eingangsspannung in wenigstens eine Ausgangsspannung. Ferner betrifft die Erfindung ein Verfahren zum Steuern der Schaltungsanordnung.

### Hintergrund der Erfindung

Zur Umsetzung einer Eingangsspannung in eine oder mehrere Ausgangsspannungen werden Umrichterschaltungen verwendet, die Halbleiterschalter, insbesondere Transistoren aufweisen, um Strompfade innerhalb der Umrichterschaltungen zu kommutieren. Werden diese Halbleiterschalter bei einer anliegenden Sperrspannung eingeschaltet, entstehen Schaltverluste, da in diesem Fall bereits ein Strom durch die Halbleiterschalter zu fließen beginnt, wenn die Sperrspannung noch nicht vollständig abgebaut ist. Ein solcher Einschaltvorgang wird auch als harter Einschaltvorgang bezeichnet.

Zur Reduzierung der Schaltverluste, die aufgrund von harten Schaltvorgängen entstehen, sind so genannte weich schaltende Umrichterschaltungen bekannt, bei denen die Spannung über dem Halbleiterschalter vor bzw. während des Einschaltens auf den Wert Null gesenkt wird. Daher spricht man in diesem Zusammenhang auch von Nullspannungsschalten.

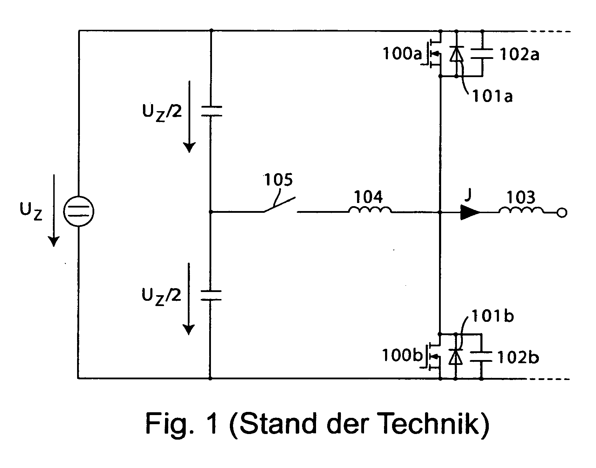

Eine Schaltung, die ein derartiges weiches Einschalten und Abschalten der Halbleiterschalter in einem Stromrichter ermöglicht, ist der so genannte Auxiliary-Resonant-Commutated-Pole-Inverter (ARCPI), der beispielsweise in der Veröffentlichung R.W. DeDoncker, J.P.Lyons, "The Auxiliary Commutated Pole Converter", IEEE-IAS Annual Conference 1990, S. 1228-1235 beschrieben wird. Ein Brückenzweig der Schaltung ist dabei in der Figur 1 veranschaulicht. Dieser umfasst eine parallel zur Eingangsspannung $U_z$ geschaltete Halbbrücke mit zwei Halbleiterschaltern 100a,b. Antiparallel zu den Halbleiterschaltern 100a,b sind Freilaufdioden 101a,b angeordnet. Ferner sind Resonanzkapazitäten 102a,b parallel zu den Halbleiterschaltern 100a,b geschaltet. Der Mittelpunkt der Halbbrücke ist mit der Lastinduktivität 103 verbunden. Ferner ist der Mittelpunkt über eine Resonanzdrossel 104 und einen Hilfsschalter 105 mit dem Mittelpunkt der Eingangsspannung UZ verbunden. Während einer Kommutierung des Laststroms J wird der Hilfsschalter 105 eingeschaltet. Hierdurch wird ein Strom in den Mittelpunkt der Halbbrücke eingeprägt, der ein Umschwingen der Spannungen an den Resonanzkapazitäten 102 und damit ein Nullspannungsschalten ermöglicht.

Der ARCPI weist dabei den Nachteil auf, dass mit der Resonanzdrossel und dem Hilfsschalter zusätzliche Komponenten erforderlich sind, um Nullspannungsschalten zu ermöglichen. Diese Komponenten erhöhen den Bauteilaufwand und tragen nicht zur Leistungsübertragung bei. Ferner ist die Ansteuerung des Hilfsschalters 105 und der Halbleiterschalter 100a,b auf den durch die Resonanzdrossel 104 getriebenen Umschwingvorgang abzustimmen, wofür in der Regel aufwändige Treiberschaltungen vorgesehen werden müssen, die insbesondere Detektoren für den Zustand des Resonanzkreises umfassen.

### Darstellung der Erfindung

Daher ist es eine Aufgabe der Erfindung, eine möglichst effiziente Umsetzung einer Eingangsspannung in eine Ausgangsspannung zu gewährleisten.

Die Aufgabe wird gelöst durch eine Schaltungsanordnung mit den Merkmalen des Patentanspruchs 1 und ein Verfahren zum Steuern dieser Schaltungsanordnung nach dem Patentanspruch 25. Ausgestaltungen der Schaltungsanordnung und des Verfahrens werden in den abhängigen Ansprüchen angegeben.

Demgemäß ist nach einem ersten Aspekt der Erfindung vorgesehen, dass eine Schaltungsanordnung zum Umsetzen einer Eingangsspannung in eine Ausgangsspannung wenigstens eine Ausgangshalbbrücke und wenigstens eine Eingangshalbbrücke umfasst, die parallel zu einer Zwischenkreiskapazität zwischen eine obere und eine untere Spannungsschiene geschaltet sind. Jede Halbbrücke weist ein oberes Brückenelement, ein unteres Brückenelement und einen zugänglichen Mittelpunkt zwischen dem oberen und dem unteren Brückenelement auf, wobei die Brückenelemente eine Parallelschaltung eines Schaltelements und einer Kapazität umfassen. Dabei ist ein durch den Mittelpunkt einer Halbbrücke fließender Strom durch ein Schalten wenigstens eines Schaltelements der Brückenelemente der Halbbrücke von dem unteren Brückenelement auf das obere Brückenelement und umgekehrt kommutierbar. Der Mittelpunkt der Eingangshalbbrücke ist über eine Eingangsinduktivität mit einem Eingangsspannungsanschluss verbunden. Der Mittelpunkt der Ausgangshalbbrücke ist über eine Induktivität mit einem Ausgangsspannungsanschluss verbunden, und der Mittelpunkt der Eingangshalbbrücke ist über einen Koppelschalter mit dem Mittelpunkt der Ausgangshalbbrücke verbunden.

Die Erfindung beinhaltet die Idee, eine Schaltungsanordnung zur Umsetzung einer Eingangsspannung in eine Ausgangsspannung einzusetzen, die aus wenigstens einer Ausgangshalbbrücke und einer Eingangshalbbrücke aufgebaut ist, welche Brückenelemente zur Kommutierung der durch die Mittelpunkte der Halbbrücken fließenden Ströme aufweisen. Dabei kann die Eingangshalbbrücke beispielsweise im Hochsetzstellerbetrieb arbeiten und die Ausgangshalbbrücke im Tiefsetzstellerbetrieb Bei der Eingangsspannung und bei der Ausgangsspannung kann es sich jeweils um eine Gleichspannung oder eine ein- oder mehrphasige Wechselspannung handeln. Bei den Kapazitäten, die parallel zu den Schaltelementen der Brückenelemente geschaltet sind, kann es sich um die parasitären Kapazitäten der Schaltelemente handeln. Gleichfalls kann es jedoch auch vorgesehen sein, dass die Kapazitäten durch Kondensatoren gebildet werden, die zusätzlich parallel zu den Schaltelementen geschaltet sind.

Unter einer Kommutierung des Stroms von einem ersten Brückenelement auf ein zweites Brückenelement einer Halbbrücke wird ein Vorgang verstanden, bei dem ein Strompfad durch das erste Brückenelement abgeschaltet und ein Strompfad durch das zweite Brückenelement eingeschaltet wird. Ein derartiger Kommutierungsvorgang eines Stroms in einer Halbbrücke von einem ersten Brückenelement auf ein zweites Brückenelement kann bei der Schaltungsanordnung durch einen über den Koppelschalter zwischen den Mittelpunkten der Halbbrücken fließenden Strom derart unterstützt werden, dass ein Einschalten des zweiten Brückenelements durch Nullspannungsschalten erfolgen kann. Hierdurch werden die Schaltverluste der Schaltungsanordnung deutlich reduziert. Zudem ist der Koppelschalter dazu in der Lage, Energie von der Eingangshalbbrücke zur Ausgangshalbbrücke zu übertragen. Hierdurch können die Leitungsverluste der Schaltungsanordnung reduziert werden. Ein weiterer Vorteil der Schaltungsanordnung besteht darin, dass keine zusätzlichen passiven Bauelemente erforderlich sind, um einen weich schaltenden Betrieb zu realisieren. Hierdurch wird insbesondere die Ansteuerung der Schaltelemente der Brückenelemente vereinfacht, da der Zustand des Systems nicht von passiven Bauelemente abhängt. Insbesondere müssen keine Detektoren zur Erfassung des Zustands eines Schwingkreises vorgesehen werden.

Das Verfahren sowie eine Ausgestaltung der Stromrichterschaltung sehen vor, dass bei einer Kommutierung des durch den Mittelpunkt einer Halbbrücke fließenden Stroms von einem ersten Brückenelement auf das zweite Brückenelement der Halbbrücke die Brückenelemente während einer Kommutierungsphase in einem Sperrzustand betrieben werden.

In dieser Ausgestaltung kann der Strom, der durch den Mittelpunkt der Halbbrücke fließt, dazu genutzt werden, die Kapazität des einzuschaltenden Brückenelements zu entladen, so dass ein Einschalten durch Nullspannungsschalten ermöglicht wird. Der Strom wird dabei zunächst dazu genutzt, die relevanten Kapazitäten umzuladen, bis schließlich eine Freilaufdiode bzw. eine als Schaltelement vorgesehene Diode des einzuschaltenden Brückenelements zu leiten beginnt. Das Entladen der Kapazität der einzuschaltenden Brückenelemente ist dabei mit dem Aufladen oder Entladen der Kapazitäten weiterer Brückenelemente verbunden, zu denen vom Mittelpunkt der betreffenden Halbbrücke eine leitende Verbindung besteht. Diese Umladevorgänge werden ebenfalls von dem Entladestrom der Kapazität des einzuschaltenden Brückenelements, bewirkt. Ein Strom, der geeignet ist, die Kapazität des einzuschaltenden Brückenelements zu entladen, bewirkt somit auch ein Auf- oder Entladen der weiteren Kapazitäten, zu denen eine leitende Verbindung besteht.

Ferner sehen das Verfahren und eine Ausführungsform der Schaltungsanordnung vor, dass der Koppelschalter während einer Kommutierung eines durch den Mittelpunkt der Ausgangshalbbrücke in die Ausgangsinduktivität fließenden Ausgangsstroms von einem ersten Brückenelement auf ein zweites Brückenelement der Ausgangshalbbrücke eingeschaltet wird, wenn der Ausgangsstrom nach Betrag und/oder Vorzeichen nicht geeignet ist, ein Entladen der Kapazität des zweiten Brückenelements zu bewirken.

Vorteilhaft kann in dieser Ausführungsform ein Kommutierungsvorgang in der Ausgangshalbbrücke durch einen über den Koppelschalter zwischen der Ausgangshalbbrücke und der Einganghalbbrücke fließenden Strom unterstützt werden, wenn der Ausgangsstrom der Ausgangshalbbrücke nicht geeignet ist, die Kapazität des einzuschaltenden Brückenelements zu entladen.

Es zeigt sich, dass bei eingeschaltetem Koppelschalter eine Differenz zwischen dem von der Eingangsinduktivität in den Mittelpunkt der Eingangshalbbrücke fließenden Strom und dem Ausgangsstrom der Ausgangshalbbrücke das Entladen der Kapazität bewirkt.

Daher ist in einer verbundenen Ausgestaltung der Schaltungsanordnung und einer Ausführungsform des Verfahrens vorgesehen, dass ein während der Kommutierung durch die Eingangsinduktivität in den Mittelpunkt der Eingangshalbbrücke fließender Eingangsstrom derart eingestellt wird, dass eine Differenz zwischen diesem Eingangsstrom und dem Ausgangsstrom nach Betrag und Vorzeichen geeignet ist, ein Entladen der Kapazität des zweiten Brückenelements zu bewirken.

In einer Ausgestaltung liegt die obere Spannungsschiene auf einem höheren Potenzial als die untere Spannungsschiene. Ferner wird der Eingangsstrom beispielsweise positiv gezählt, wenn er von der Eingangsinduktivität in den Mittelpunkt der Eingangshalbbrücke fließt. Der Ausgangsstrom wird beispielsweise positiv gezählt, wenn er von dem Mittelpunkt der Ausgangshalbbrücke in die Ausgangsinduktivität fließt.

Unter diesen Voraussetzungen wird der Koppelschalter in einer Ausgestaltung der Schaltungsanordnung und des Verfahrens während einer Kommutierung eines durch den Mittelpunkt der Ausgangshalbbrücke in Richtung der Ausgangsinduktivität fließenden Ausgangsstrom von dem unteren zu dem oberen Brückenelement der Ausgangshalbbrücke eingeschaltet, falls der Ausgangsstrom nicht klein genug ist, um ein Entladen der Kapazität des oberen Brückenelements zu bewirken.

Bei einer verbundenen Ausführungsform ist vorgesehen, dass der während der Kommutierung durch die Induktivität der Eingangshalbbrücke in den Mittelpunkt der Eingangshalbbrücke fließende Eingangsstrom derart eingestellt wird, dass er so groß ist, dass eine Differenz zwischen diesem Eingangsstrom und dem Ausgangsstrom ausreichend groß ist, um ein Entladen der Kapazität des oberen Brückenelements zu bewirken.

Darüber hinaus beinhaltet eine Ausführungsform unter den zuvor genannten Voraussetzungen, dass der Koppelschalter während einer Kommutierung des durch den Mittelpunkt der Ausgangshalbbrücke in Richtung der Induktivität der Ausgangshalbbrücke fließenden Ausgangsstroms von dem oberen auf das untere Brückenelement der Ausgangshalbbrücke eingeschaltet wird, falls der Ausgangsstrom nicht groß genug ist, um ein Entladen der Kapazität des unteren Brückenelements der Ausgangshalbbrücke zu bewirken.

Hiermit verbunden ist eine Ausgestaltung, bei der vorgesehen ist, dass der während der Kommutierung durch die Induktivität der Eingangshalbbrücke in den Mittelpunkt der Eingangshalbbrücke fließende Eingangsstrom so eingestellt wird, dass eine Differenz zwischen diesem Eingangsstrom und dem Ausgangsstrom geeignet ist, ein Entladen der Kapazität des unteren Brückenelements der Ausgangshalbbrücke zu bewirken.

Bei einer Weiterbildung der Schaltungsanordnung und des Verfahrens ist vorgesehen, dass der Koppelschalter ausgeschaltet wird, wenn sich sowohl das obere Brückenelement der Eingangshalbbrücke als auch das untere Brückenelement der Ausgangshalbbrücke in einem leitenden Zustand befinden, oder wenn sich sowohl das untere Brückenelement der Eingangshalbbrücke als auch das obere Brückenelement der Ausgangshalbbrücke in einem leitenden Zustand befinden.

Vorteilhaft wird hierdurch insbesondere verhindert, dass die Zwischenkreiskapazität eingeschaltetem Koppelschalter kurzgeschlossen wird.

Darüber hinaus beinhaltet eine Weiterbildung der Schaltungsanordnung und des Verfahrens, dass der Koppelschalter nur dann eingeschaltet wird, wenn sich die oberen Brückenelemente der Eingangshalbbrücke und der Ausgangshalbbrücke jeweils in einem leitenden Zustand oder in einem Sperrzustand befinden.

Es hat sich gezeigt, dass hierdurch eine besonders einfache Ansteuerung des Koppelschalters erreicht werden kann, bei der sowohl einer weich schaltender Betrieb der Schaltungsanordnung möglich ist, als auch eine Energieübertragung von der Eingangshalbbrücke zu der Ausgangshalbbrücke über den Koppelschalter erfolgen kann.

Der Eingangsstrom der Eingangshalbbrücke und der Ausgangsstrom der Ausgangshalbbrücke variieren zwischen Minimal- und Maximalwerten. Die Extremwerte werden dabei, jeweils bei einer Kommutierung des Stroms von einem ersten Brückenelement der betreffenden Halbbrücke auf ein zweites Brückenelement der Halbbrücke angenommen.

Daher sieht eine Ausgestaltung der Schaltungsanordnung und des Verfahrens vor, dass eine Kommutierung des von dem Mittelpunkt der Ausgangshalbbrücke in die Ausgangsinduktivität fließenden Ausgangsstroms von einem ersten Brückenelement auf ein zweites Brückenelement der Ausgangshalbbrücke, bei welcher der Koppelschalter eingeschaltet wird, mit der Kommutierung des von der Eingangsinduktivität in den Mittelpunkt der Eingangshalbbrücke fließenden Eingangsstroms von einem ersten Brückenelement auf ein zweites Brückenelement der Eingangshalbbrücke synchronisiert wird, bei welcher der Eingangsstrom derart eingestellt ist, dass die Differenz zwischen dem Eingangsstrom und den Ausgangsstrom nach Betrag und Vorzeichen geeignet ist, ein Entladen der Kapazität des zweiten Brückenelements der Ausgangshalbbrücke zu bewirken.

Es hat sich gezeigt, dass bei einer derartigen Synchronisierung besonders einfach sichergestellt werden kann, dass der in die Eingangshalbbrücke fließende Strom geeignet ist, die Kommutierung des Ausgangsstroms von dem unteren Brückenelement auf das obere Brückenelement der Ausgangshalbbrücke derart zu unterstützen, dass ein Einschalten des oberen Brückenelements durch Nullspannungsschalten erfolgen kann.

Eine Ausgestaltung der Schaltungsanordnung und des Verfahrens zeichnet sich dadurch aus, dass ein aus der Eingangsinduktivität in die Eingangshalbbrücke fließender Strom so eingestellt wird, dass er während der Kommutierung von einem ersten Brückenelement auf ein zweites Brückenelement der Eingangshalbbrücke nach Betrag und/oder Vorzeichen geeignet ist, während der Kommutierungsphase ein Entladen der Kapazität des zweiten Brückenelements zu bewirken.

Hierdurch wird sichergestellt, dass sich die Kapazität des einzuschaltenden Brückenelements der Eingangshalbbrücke geschaltet ist, während des Kommutierungsvorgangs entladen wird, so dass der einzuschaltende Schalter durch ein Nullspannungsschalten eingeschaltet werden kann. Der Betrieb der Eingangshalbbrücke entspricht in dieser Ausführungsform dem so genannten Resonant-Pole-Verfahren.

Eine Ausführungsform der Schaltungsanordnung und des Verfahrens ist **dadurch gekennzeichnet**, dass die Ausgangshalbbrücke mit einer Frequenz getaktet wird, die gleich der Frequenz der Eingangshalbbrücke ist, und/oder dass die Frequenz der Eingangshalbbrücke ein ganzzahliges Vielfaches der Frequenz der Ausgangshalbbrücke ist.

Vorteilhaft wird hierdurch eine Synchronisierung ermöglicht, die es erlaubt, den Koppelschalter in einfacher Weise anzusteuern.

In einer weiteren Ausgestaltung der Schaltungsanordnung und des Verfahrens ist vorgesehen, dass mehrere elektrisch parallel zu der Zwischenkreiskapazität geschaltete Ausgangshalbbrücken vorgesehen sind, die als ein ein- oder mehrphasiger Wechselrichter betrieben werden.

In dieser Ausgestaltung kann die Schaltungsanordnung vorteilhaft als ein ein- oder mehrphasiger Wechselrichter betrieben werden, der eine Eingangsspannung in eine ein- oder mehrphasige Wechselspannung umsetzt.

Insbesondere kann die Schaltungsanordnung als ein dreiphasiger Wechselrichter betrieben werden. In dieser Ausgestaltung sind vorzugsweise drei Ausgangshalbbrücke vorgesehen, die elektrisch parallel zu der Zwischenkreiskapazität geschaltet sind. In dieser Ausgestaltung kann die Schaltungsanordnung ausgangsseitig beispielsweise an ein Drehstromnetz angeschlossen werden.

Bei einem Betrieb als einphasiger Wechselrichter sind vorzugsweise zwei elektrisch parallel zu der Zwischenkreiskapazität geschaltete Ausgangshalbbrücken vorgesehen.

Eine Weiterbildung der Schaltungsanordnung und des Verfahrens zeichnet sich dadurch aus, dass ein bidirektionaler Betrieb vorgesehen ist, wobei die Ausgangshalbbrücken in einem Betriebsmodus als Gleichrichter betrieben werden können.

Vorzugsweise handelt es sich hierbei um einen Betriebsmodus, bei dem Energie von den Ausgangsspannungsanschlüssen zu dem Eingangsspannungsschluss bzw. den Eingangsspannungsanschlüssen übertragen wird. In einem weiteren Betriebsmodus, in dem Energie von dem Eingangsspannungsanschluss oder den Eingangsspannungsanschlüssen zu Ausgangsspannungsanschlüssen transportiert wird, arbeiten die Ausgangshalbbrücken wie zuvor beschrieben vorzugsweise im Wechselrichterbetrieb. Der oder die Koppelschalter werden im bidirektionalen Betrieb vorzugsweise bidirektional ausgeführt,d.h., dass sie Sperrspannung in beide Richtungen aufnehmen können und Strom in beide Richtungen leiten können.

Eine Ausgestaltung der Schaltungsanordnung und des Verfahrens zeichnet sich dadurch aus, dass drei elektrisch parallel zu der Zwischenkreiskapazität geschaltete Eingangshalbbrücken vorgesehen sind, wobei die Mittelpunkte der Ausgangshalbbrücken jeweils über einen Koppelschalter mit genau einem Mittelpunkt einer Eingangshalbbrücke verbunden sind.

Vorteilhaft ist bei dieser Ausgestaltung jeder Ausgangshalbbrücke der Wechselrichterschaltung eine Eingangshalbbrücke zugeordnet, die ein Nullspannungsschalten in der betreffenden Ausgangshalbbrücke unterstützt.

Eine Ausgestaltung der Schaltungsanordnung und des Verfahrens ist **dadurch gekennzeichnet**, dass die Mittelpunkte der Eingangshalbbrücken über jeweils eine Eingangsinduktivität mit einem Eingangsspannungsanschluss verbunden sind.

Eine alternative Ausgestaltung der Schaltungsanordnung und des Verfahrens sieht vor, dass die elektrisch parallel zu der Zwischenkreiskapazität geschalteten Ausgangshalbbrücken über jeweils einen Koppelschalter mit genau einer Eingangshalbbrücke verbunden sind.

In dieser Ausgestaltung ist lediglich eine Eingangshalbbrücke vorgesehen, mit der die Ausgangshalbbrücken des Wechselrichters verbunden sind. Hierdurch können sich zwar Einschränkungen in Bezug auf den weich schaltenden Betrieb der Ausgangshalbbrücken ergeben, die Ansteuerung des Wechselrichters wird jedoch bei Verwendung einer einzigen Eingangshalbbrücke deutlich vereinfacht und der Materialaufwand reduziert.

Eine Weiterbildung der Schaltungsanordnung und des Verfahrens ist **dadurch gekennzeichnet**, dass die den Wechselrichter bildenden Ausgangshalbbrücken nach Maßgabe einer 120°-Flattop-Modulation angesteuert werden, so dass die Brückenelemente jeweils einer Ausgangshalbbrücke für ein Drittel der Periode des mittleren Ausgangsstroms der Ausgangshalbbrücke nicht geschaltet werden.

Dabei hat sich gezeigt, dass sich bei Ansteuerung des Wechselrichters anhand des 120°-Flattop-Verfahrens auch bei Verwendung nur einer Eingangshalbbrücke ein nahezu dauerhafter weich schaltender Betrieb der Ausgangshalbbrücken realisieren lässt.

Bei einer weiteren Ausführungsform der Schaltungsanordnung ist vorgesehen, dass zwei elektrisch parallel zu der Zwischenkreiskapazität geschaltete Eingangshalbbrücken vorgesehen sind, deren Mittelpunkte jeweils über eine Eingangsinduktivität an einen Pol der Eingangsspannung angeschlossen sind, wobei eine erste Eingangshalbbrücke im Hochsetzstellerbetrieb und eine zweite Halbbrücke im Tiefsetzstellerbetrieb arbeitet, und wobei der Mittelpunkt der Ausgangshalbbrücke über jeweils einen Koppelschalter mit den Mittelpunkten der Eingangshalbbrücken verbunden sind.

Bei einer verbundenen Ausgestaltung der Schaltungsanordnung und des Verfahrens ist vorgesehen, dass einer der Koppelschalter während einer Kommutierung eines durch den Mittelpunkt der Ausgangshalbbrücke in Richtung der Ausgangsinduktivität fließenden Ausgangsstroms von einem ersten Brückenelement auf ein zweites Brückenelement der Ausgangshalbbrücke eingeschaltet wird, falls der Ausgangsstrom nach Betrag und/oder Richtung nicht geeignet ist, ein Entladen der Kapazität des zweiten Brückenelements zu bewirken.

Darüber hinaus ist es bei einer verbundenen Ausgestaltung der Schaltungsanordnung und des Verfahrens vorgesehen, dass derjenige Koppelschalter eingeschaltet wird, der den Mittelpunkt der Ausgangshalbbrücke mit dem Mittelpunkt der Eingangshalbbrücke verbindet, die so ausgewählt ist, dass der während der Kommutierung durch die Induktivität der Eingangshalbbrücke in den Mittelpunkt der Eingangshalbbrücke fließende Eingangsstrom so eingestellt ist, dass eine Differenz zwischen diesem Eingangsstrom und dem Ausgangsstrom geeignet ist, ein Entladen der Kapazität des zweiten Brückenelements der Ausgangshalbbrücke zu bewirken.

Bei einer Weiterbildung der Schaltungsanordnung und des Verfahrens ist vorgesehen, dass die Eingangshalbbrücken als einphasiger oder mehrphasiger Gleichrichter betrieben werden.

Vorteilhaft kann die Schaltungsanordnung somit als ein Umrichter betrieben werden, der eine Wechselspannung bzw. eine mehrphasige Eingangsspannung in eine Ausgangsspannung umsetzen kann. Im Falle eines einphasigen Gleichrichters sind dabei wenigstens zwei Eingangshalbbrücken vorgesehen, im Falle eines dreiphasigen Gleichrichters vorzugsweise drei Eingangshalbbrücken.

Ferner sieht eine Ausgestaltung der Schaltungsanordnung und des Verfahrens vor, dass es sich bei dem Schaltelement des unteren Brückenelements der Eingangshalbbrücke und bei dem Schaltelement des oberen Brückenelements der Ausgangshalbbrücke jeweils um einen Transistor mit antiparallel geschalteter Freilaufdiode handelt.

Eine Weiterbildung der Schaltungsanordnung und des Verfahrens beinhaltet, dass es sich bei dem Schaltelement des oberen Brückenelements der Eingangshalbbrücke und bei dem Schaltelement des oberen Brückenelements der Ausgangshalbbrücke jeweils um einen Transistor mit antiparallel geschalteter Freilaufdiode oder um eine Diode handelt, die derart geschaltet ist, dass sie sich in einem Sperrzustand befindet, wenn das Schaltelement des gegenüberliegenden Brückenelements leitend geschaltet ist.

Eine Ausführungsform der Schaltungsanordnung und des Verfahrens beinhaltet, dass der Koppelschalter wenigstens einen Transistor umfasst, dessen Source- oder Emitteranschluss mit dem Mittelpunkt der Eingangshalbbrücke oder der Ausgangshalbbrücke verbunden ist, wobei eine Treiberschaltung des Transistors anhand eines Bootstrap-Verfahrens gespeist wird.

Dies erlaubt es, die Treiberschaltung für den Koppelschalter besonders einfach auszuführen.

Bei einer weiteren Ausgestaltung der Schaltungsanordnung und des Verfahrens ist vorgesehen, dass die Brückenelemente und die Koppelschalter in einem Modul untergebracht sind.

Vorteilhaft können hierdurch insbesondere Streuinduktivitäten deutlich reduziert werden. Die Brückenelemente und die Koppelschalter können innerhalb des Moduls beispielsweise durch Bonden miteinander verbunden werden.

Darüber hinaus sieht eine Ausführungsform der Schaltungsanordnung und des Verfahrens vor, dass eine Treiberschaltung wenigstens teilweise in das Modul integriert ist.

Die erfindungsgemäße Schaltungsanordnung erlaubt aufgrund der weich schaltenden Betriebsmodi eine sehr effiziente Energieübertragung. Ferner kann die Eingangsspannung in einem sehr weiten Bereich variiert werden. Daher eignet sie sich besonders gut für die Einspeisung einer in einem Photovoltaikgenerator, einer Brennstoffzelle oder einer Windkraftanlage erzeugten Energie in ein Stromnetz. Gleichfalls kann die Schaltung auch durch einen anderem Generator oder eine Batterie gespeist werden. Vorteilhaft kann mit der Schaltungsanordnung insbesondere ein Motor, beispielsweise ein Synchron- oder Asynchronmotor, mit Energie versorgt werden.

In Ausgestaltungen der Schaltungsanordnung wird der Eingangsspannungsanschluss der Schaltungsanordnung daher durch einen Photovoltaikgenerator, eine Windkraftanlage oder eine Brennstoffzelle versorgt. Die Ausgangsspannungsanschlüsse können beispielsweise an ein Drehstromsystem angeschlossen sein.

Die zuvor genannten sowie weitere Vorteile, Besonderheiten und zweckmäßige Weiterbildungen der Erfindung werden auch anhand der Ausführungsbeispiele deutlich, die im Folgenden unter Bezugnahme auf die Figuren beschrieben werden.

**Kurze Beschreibung der Figuren**

Von den Figuren zeigt

Fig. 1    einen Brückenzweig eines Auxiliary-Resonant-Commutad-Pole-Inverter nach dem Stand der Technik,

Fig. 2    ein Schaltdiagramm eines Gleichstromstellers in einer ersten Ausführungsform,

Fig. 3    schematische Diagramme, mit den zeitlichen Verläufen der Leitfähigkeitszustände der Halbleiterschalter und verschiedener Ströme innerhalb des in Figur 2 dargestellten Gleichstromstellers,

Fig. 4    ein Schaltdiagramm eines Gleichstromstellers in einer zweiten Ausführungsform,

Fig. 5    ein Schaltdiagramm eines Gleichstromstellers in einer dritten Ausführungsform,

Fig. 6    ein Schaltdiagramm eines dreiphasigen Wechselrichters in einer ersten Ausführungsform,

Fig. 7    ein Diagramm mit einer Veranschaulichung der zeitlichen Verläufe der Mittelwerte, Maximalwerte und Minimalwerte eines Eingangsstroms sowie eines Ausgangsstroms des in der Figur 6 dargestellten Wechselrichters in einer ersten Betriebsart des Wechselrichters,

Fig. 8    ein Diagramm mit einer Veranschaulichung der zeitlichen Verläufe der Mittelwerte, Maximalwerte und Minimalwerte eines Eingangsstroms sowie eines Ausgangsstroms des in der Figur 6 dargestellten Wechselrichters in einer zweiten Betriebsart des Wechselrichters,

Fig. 9    ein Diagramm mit einer Veranschaulichung der zeitlichen Verläufe der Mittelwerte, Maximalwerte und Minimalwerte eines Eingangsstroms sowie eines Ausgangsstroms des in der Figur 6 dargestellten Wechselrichters in einer zweiten Betriebsart des Wechselrichters,

Fig. 10    ein Schaltdiagramm eines dreiphasigen Wechselrichters in einer zweiten Ausführungsform,

Fig. 11    ein Schaltdiagramm eines dreiphasigen Wechselrichters in einer dritten Ausführungsform,

Fig. 12    ein Schaltdiagramm eines dreiphasigen Wechselrichters in einer vierten Ausführungsform,

Fig. 13    ein Schaltdiagramm eines Umrichters zum Umsetzen einer dreiphasigen Eingangsspannung in eine dreiphasige Ausgangsspannung und

Fig. 14    ein Schaltdiagramm eines einphasigen Wechselrichters.

## Ausführliche Darstellung von Ausführungsbeispielen

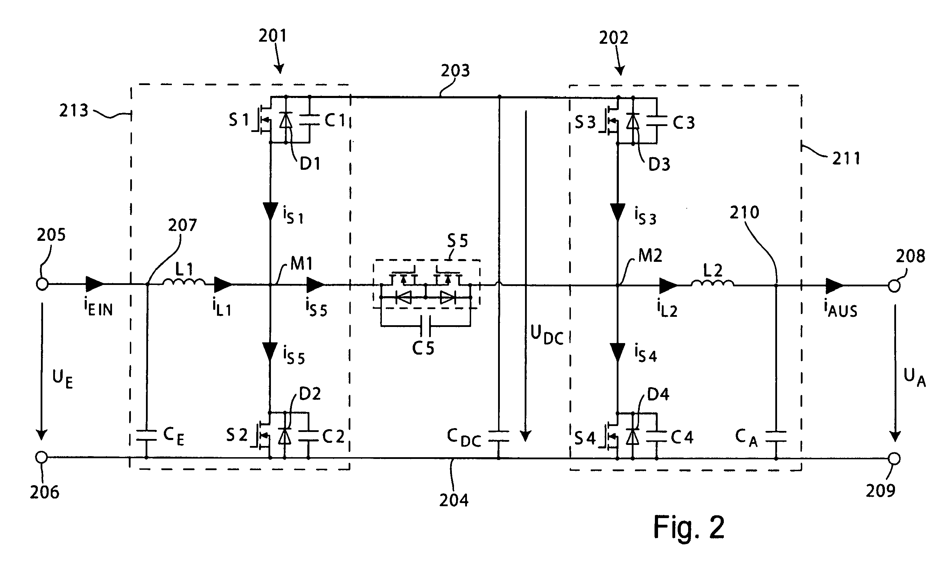

Figur 2 zeigt eine Ausführungsform einer Schaltungsanordnung, die als Gleichstromsteller (DC/DC-Wandler) arbeitet. Der dargestellte Gleichstromsteller ist aus einer Eingangsstufen 213, einem Gleichstromzwischenkreis mit einer Zwischenkreiskapazität $C_{DC}$ und einer Ausgangsstufe 211 aufgebaut und kann eine Eingangsgleichspannung $U_E$ in eine Ausgangsgleichspannung $U_A$ umsetzen, die größer, kleiner oder gleich der Eingangsspannung $U_E$ sein kann. Die Zwischenkreiskapazität $C_{DC}$ wird durch einen Kondensator oder mehrere in einer Kondensatorbank in Reihe geschaltete Kondensatoren gebildet, die zwischen eine obere Spannungsschiene 203 und eine untere Spannungsschiene 204 geschaltet sind. Zwischen der oberen Spannungsschiene 203 und der unteren Spannungsschiene 204 liegt die Zwischenkreisspannung $U_{DC}$ an und die obere Spannungsschiene 203 liegt auf einem höheren elektrischen Potenzial als die untere Spannungsschiene 204.

Die Eingangsstufe 213 enthält eine Eingangshalbbrücke 201. Diese umfasst eine Reihenschaltung zweier Halbleiterschalter S1 und S2, die zwischen die obere Spannungsschiene 203 und die untere Spannungsschiene 204 parallel zu der Zwischenkreiskapazität $C_{DC}$ geschaltet sind. Parallel zu den Halbleiterschaltern S1 und S2 sind Kapazitäten C1 und C2 geschaltet. Der zugängliche Mittelpunkt M1 der Eingangshalbbrücke 201 zwischen den Halbleiterschaltern S1 und S2 ist eingangsseitig über eine durch eine Spule gebildete Induktivität L1 mit einem ersten Pol 205 einer Eingangsgleichspannung $U_E$ verbunden. Die untere Spannungsschiene 204 ist bei der dargestellten Schaltungsanordnung mit dem zweiten Pol 206 der Eingangsspannung $U_E$ verbunden und liegt auf einem geringeren Potenzial als die oberen Spannungsschiene 203. Zur Stützung der Eingangsspannung $U_E$ ist eine Kapazität $C_E$ vorgesehen, die parallel zur Eingangsspannung $U_E$ geschaltet ist. Der Eingangsstrom $i_{EIN}$ des Gleichstromstellers verzweigt sich an dem Punkt 207 in einen Strom, der in die Kapazität $C_E$ fließt und in den Eingangsstrom $i_{L1}$, der über die Induktivität L1 in den Mittelpunkt M1 der Eingangshalbbrücke 201 fließt.

Die Ausgangsstufe 211 enthält eine Ausgangshalbbrücke 202. die in ähnlicher Weise wie die Eingangshalbbrücke 201 ist die Ausgangshalbbrücke 202 aufgebaut ist. Sie umfasst gleichfalls eine Reihenschaltung zweier Halbleiterschalter S3 und S4 mit parallel zu den Halbleiterschaltern S3 und S4 geschalteten Kapazitäten C3 und C4 und antiparallel geschalteten Dioden D3 und D4. Die Reihenschaltung ist parallel zu der Zwischenkreiskapazität $C_{DC}$ zwischen die obere Spannungsschiene 203 und die untere Spannungsschiene 204 geschaltet und verfügt über einen zugänglichen Mittelpunkt M2 zwischen den beiden Halbleiterschaltern S3 und S4, der über eine Induktivität L2 mit einem ersten Pol 208 der Ausgangsspannung $U_A$ verbunden ist. Der zweite Pol 209 der Ausgangsspannung $U_A$ ist mit der unteren Spannungsschiene 204 verbunden. Zur Glättung der Ausgangsspannung $U_A$ ist eine parallel zu der Ausgangsspannung $U_A$ geschaltete Kapazität $C_A$ vorgesehen. Der von dem Mittelpunkt M2 der Ausgangshalbbrücke 202 über die Induktivität L2 fließende Strom Ausgangsstrom $i_{L2}$ der Ausgangshalbbrücke 202 verzweigt sich an dem Punkt 210 in einen Strom, der in die Glättungskapazität $C_A$ fließt und den Ausgangsstrom $i_{AUS}$ des Gleichstromstellers.

Der Mittelpunkt M1 der Eingangshalbbrücke 201 und der Mittelpunkt M2 der Ausgangsstufe 202 sind über einen Koppelschalter S5 miteinander verbunden, zu dem eine Kapazität C5 elektrisch parallel geschaltet ist. In der dargestellten Ausgestaltung handelt es sich bei dem Koppelschalter S5 um einen bidirektionalen Schalter, der in beide Richtungen Sperrspannung aufnehmen und Strom leiten kann. Bei Verwendung eines bidirektionalen Koppelschalters ist eine bidirektionale Leistungsübertragung im weichschaltenden Betrieb aller Schalter S1-S5 möglich, bei dem über die Eingangshalbbrücke 201 eingespeiste Leistung zur Ausgangsstufe 202 sowie über die Ausgangsstufe eingespeiste Leistung zur Eingangshalbbrücke 201 übertragen werden kann. Anstelle eines bidirektionalen Koppelschalters S5 kann auch ein unidirektionaler Koppelschalter S5' eingesetzt werden, der in beide Richtung Sperrspannung aufnehmen, Strom jedoch nur in eine Richtung leiten kann. Der unidirektionale Koppelschalter S5' ermöglicht je nach Polung einen Stromfluss vom Mittelpunkt M1 der Eingangshalbbrücke 201 zum Mittelpunkt M2 der Ausgangsstufe 202 oder umgekehrt. Wie weiter unten noch erläutert wird, wird die Leitungsrichtung eines unidirektionalen Koppelschalters S5' entsprechend dem Arbeitspunkt des Gleichstromstellers so gewählt, dass ein weich schaltender Betrieb der Ausgangshalbbrücke ermöglicht wird.

Die in der Eingangshalbbrücke 201 und der Ausgangshalbbrücke 202 verwendeten Halbleiterschalter S1-S4 sind beispielsweise als Leistungs-MOSFETs (MOSFET: Metal Oxide Semiconductor Field Effect Transistor) ausgeführt, welche über die in der Figur 2 dargestellten Freilaufdioden D1-D4 verfügen. Der bidirektionale Koppelschalter S5 kann, wie in Figur 2 dargestellt, durch zwei antiseriell geschaltete Leistungs-MOSFETs gebildet werden. Der unidirektionale Schalter S5' kann beispielsweise aus einem Leistungs-MOSFET und einer antiseriell geschalteten Diode aufgebaut sein. Die elektrisch parallel zu den Halbleiterschaltern S1-S5 geschalteten Kapazitäten C1-C5 werden in einer Ausgestaltung durch parasitäre Kapazitäten der Halbleiterschalter S1-S4 gebildet. Im Falle von Leistungs-MOSFETs handelt es sich dabei um die Gate-Source-Kapazität, die Gate-Drain-Kapazität und die Drain-Source-Kapazität. Sofern die Halbleiterschalter S1-S4 mit Entlastungsschaltung (Snubbers) beschaltet sind, enthalten diese ebenfalls parallel zu den Halbleiterschaltern S1-S4 geschaltete Kapazitäten. In weiteren Ausgestaltungen kann es gleichfalls vorgesehen sein, dass zusätzlich Kondensatoren parallel zu den Halbleiterschaltern S1-S5 geschaltet werden.

Die Ansteuerung der Halbleiterschalter S1 und S2 der Eingangshalbbrücke 201 und der Halbleiterschalter S3 und S4 der Ausgangsbrücke 202 sowie der Koppelschalter geschieht durch eine Treiberschaltung, die in der Figur 2 nicht dargestellt ist. Die Koppelschalter S5 sind dabei so angeordnet, dass die Source- bzw. Emitteranschlüsse der enthaltenen Transistoren mit dem Mittelpunkt der Eingangshalbbrücke 201 bzw. Ausgangshalbbrücke 202 verbunden sind. Hierdurch ist es möglich, eine eine Treiberschaltung dieser Transistoren anhand eines dem an sich Fachmann bekannte Bootstrap-Verfahrens zu speisen. Die Treiberschaltungen der übrigen Halbleiterschalter S1-S4 können in einer dem Fachmann bekannten Weise gleichfalls anhand eines Boostrap-Verfahrens gespeist werden. Bei dem Boostrap-Verfahren wird ein aus einer Spannungsquelle über eine Diode ein Kondensator auf eine vorgegebene Spannung aufgeladen, wenn das Potenzial an dem Mittelpunkt der betreffenden Halbbrücke dem unteren Zwischenkreispotenzial entspricht. Steigt dieses Potenzial auf das obere Zwischenkreispotenzial verhindert die Diode ein Entladen des Kondensators, so dass die Spannung in dem Kondensator, um einen vorgegebenen Betrag über dem oberen Zwischenkreispotenzial liegt. Hierdurch ist die Spannung ausreichend hoch, um den betreffenden Halbleiterschalter einzuschalten.

Die Schaltungsanordnung ist vorzugsweise vollständig in ein Modul integriert, so dass Streuinduktivitäten gering gehalten werden. Die Bauelemente können dabei beispielsweise durch Bonden miteinander verbunden werden. Darüber hinaus kann auch die Treiberschaltung wenigstens teilweise in das Modul integriert werden.

Die Eingangshalbbrücke 201 arbeitet bei einem Leistungstransport von der Eingangshalbbrücke 201 zu der Ausgangshalbbrücke 202, d.h. bei positivem Mittelwert des Eingangsstroms $i_{L1}$ der Eingangshalbbrücke 201 im Hochsetzstellerbetrieb. Dabei werden der obere Halbleiterschalter S1 und der untere Halbleiterschalter S2 wechselweise in den leitenden Zustand geschaltet. Bei jedem Schaltvorgang wird der Eingangsstrom $i_{L1}$ der Eingangshalbbrücke 201 von einem Strompfad über den oberen Halbleiterschalter S1 zu der oberen Spannungsschiene 203 auf einen Strompfad über den unteren Halbleiterschalter S2 zu der unteren Spannungsschiene 204 kommutiert oder umgekehrt. Der Ausgangsstrom $i_{L2}$ der Ausgangshalbbrücke 202 ist bei einem Leistungstransport von der Eingangshalbbrücke 201 zu der Ausgangshalbbrücke 202 bei dem hier gewählten Vorzeichen ebenfalls positiv, und die Ausgangshalbbrücke 202 arbeitet nach Art eines Tiefsetzstellers. Dabei werden der obere Halbleiterschalter S3 und der untere Halbleiterschalter S4 wechselweise in den leitenden Zustand geschaltet. Hierdurch wird der Ausgangsstrom $i_{L2}$ der Ausgangshalbbrücke 202 von einem Strompfad von der oberen Spannungsschiene 203 über den Halbleiterschalter S3 in den Mittelpunkt M2 auf einen Strompfad von der unteren Spannungsschiene über den Halbleiterschalter S3 in den Mittelpunkt M2 kommutiert oder umgekehrt.

Die Zwischenkreisspannung $U_{DC}$ wird gemäß dieser Betriebsweise sowohl grö-βer als die Eingangsspannung $U_E$ als auch größer als die Ausgangsspannung $U_A$ eingestellt. Dies geschieht vorzugsweise durch eine geeignete Ansteuerung der Halbleiterschalter S1 und S2 der Eingangshalbbrücke 201. Für die Tastgrade $a_{S1}$ und $a_{S2}$ der Halbleiterschalter S1 und S2 der Eingangshalbbrücke 201 gilt dabei:

$$a_{S1} = 1 - a_{S2} = \frac{U_E}{U_{DC}} \qquad (1)$$

wobei der Tastgrad $a_{si}$ (i=1,2) eines Halbleiterschalters Si der Eingangshalbbrücke 201 dem Verhältnis $T_{ein,Si}/T1$ der Einschaltdauer $T_{ein, Si}$ des Halbleiterschalters Si zu der Periodendauer $T_1$ der Eingangshalbbrücke 201 entspricht. Mit der Periodendauer $T_1$ der Eingangsstufe wird die Zeitdauer zwischen einem Einschalten eines Halbleiterschalters Si bis zum nächsten Einschalten des Halbleiterschalters S1 bezeichnet. Der Kehrwert der Periodendauer $T_1$ ist die Frequenz der Eingangshalbbrücke 201. Für die Tastgrade der Halbleiterschalter S3 und S4 der Ausgangshalbbrücke 202 gilt

$$a_{S3} = 1 - a_{S4} = \frac{U_A}{U_{DC}} \qquad (2)$$

wobei der Tastgrad $a_{si}$ eines Halbleiterschalters der Ausgangshalbbrücke 202 dem Verhältnis $T_{ein,Si}/T2$ der Einschaltdauer $T_{ein, Si}$ des Halbleiterschalters Si und der Periodendauer $T_2$ der Ausgangshalbbrücke 202 entspricht. Die Tastgrade $a_{s3}$ und $a_{s4}$ der Halbleiterschalter S3 und S4 der Ausgangshalbbrücke werden gemäß der Gleichung (2) aus der Ausgangsspannung $U_A$ und der gewählten Zwischenkreisspannung $U_{DC}$ ermittelt.

Der in der Figur 2 dargestellte Gleichstromsteller kann in einer Betriebsart betrieben werden, in der alle Halbleiterschalter S1-S5 weich schaltend betrieben werden, und durch ein Nullspannungsschalten abgeschaltet und eingeschaltet werden können. Die Kommutierung des Eingangsstroms $i_{L2}$ der Eingangshalbbrücke 201 von der oberen Spannungsschiene 203 auf die untere Spannungsschiene 204 oder umgekehrt wird dabei derart vorgenommen, dass beide Halbleiterschalter S1 und S2 für die Dauer einer kurzen Übergangs- bzw. Kommutierungsphase im ausgeschalteten Zustand betrieben werden. Somit wird ein Halbleiterschalter S1, S2 erst eine kurze Zeit nach dem Ausschalten des gegenüberliegenden Halbleiterschalters S1, S2 eingeschaltet. Die Kommutierung des Ausgangsstroms $i_{L2}$ von der oberen Spannungsschiene 203 auf die untere Spannungsschiene 204 erfolgt in gleicher Weise durch ein zeitlich versetztes Schalten der Halbleiterschalter S3 und S4 der Ausgangshalbbrücke 202.

Ein weiches Ausschalten der Halbleiterschalter S1-S5 wird durch die parallel geschalteten Kapazitäten C1-C5 gewährleistet, welche die Halbleiterschalter S1-S5 bei einem Ausschaltvorgang entlasten. Während des Abschaltvorgangs eines Halbleiterschalters Si lädt sich die parallel geschaltete Kapazität Ci auf, so dass die Spannung über dem Halbleiterschalter Si nur langsam ansteigt. Hierdurch werden Schaltverluste gegenüber einem harten Abschalten des Halbleiterschalters $S_i$ erheblich reduziert.

Um beim Einschalten der Halbleiterschalter S1 und S2 der Eingangshalbbrücke 201 ein Nullspannungsschalten zu gewährleisten, wird die Eingangshalbbrücke 201 nach dem an sich bekannten Resonant-Pole-Verfahren betrieben. Dabei ist vorgesehen, dass der Eingangstrom $i_{L1}$ während der Kommutierungsphase, die parallel zu den Halbleiterschaltern geschalteten Kapazitäten C1 und C2 sowie ggf. die parallel zu dem abgeschalteten Koppelschalter S5 liegende Kapazität C5 derart umlädt, dass die Spannung über dem einzuschaltenden Halbleiterschalter S1 oder S2 auf den Wert Null sinkt.

Bei einer Kommutierung des Eingangsstroms $i_{L1}$ der Eingangshalbbrücke 201 von der oberen Spannungsschiene 203 auf die untere Spannungsschiene 204 wird somit während der Kommutierungsphase die parallel zu dem unteren Halbleiterschalter S2 geschaltete Kapazität C2 entladen. Dieser Entladevorgang geht mit dem Aufladen der parallel zu der dem Halbleiterschalter S1 geschalteten Kapazität C1 einher. Bei ausgeschaltetem Koppelschalter S5 wird ferner die parallel zu dem Koppelschalter S5 geschaltete Kapazität C5 je nach Ladezustand entladen oder aufgeladen. Der Umladevorgang beendet sich dann, wenn die antiparallel zu dem Halbleiterschalter S2 geschaltete Diode D2 leitend wird. Für den Umladevorgang muss während der Kommutierungsphase ein negativer Strom $i_{L1}$ vorliegen, dessen Betrag ausreichend groß ist, um die Kapazitäten C1, C2 und gegebenenfalls C5 in der zuvor beschriebenen Weise umzuladen. Im Hochsetzstellerbetrieb der Eingangshalbbrücke 201 nimmt der Strom $i_{L1}$ bei der Kommutierung von der oberen Spannungsschiene 203 auf die untere Spannungsschiene 204 seinen Minimalwert $i_{L1,min}$ an. Es folgt somit, dass $i_{L1,min}$ höchstens den negativen Wert $-I_m$ annehmen darf, wobei $I_m$ der Betrag des Stroms ist, der erforderlich ist, um die Kapazitäten C1 und C2 sowie gegebenenfalls die Kapazität C5 wie beschrieben umzuladen.

Bei einer Kommutierung des Stroms $i_{L1}$ von der unteren Spannungsschiene 204 auf die obere Spannungsschiene 203 wird die parallel zu dem einzuschaltenden Halbleiterschalter S1 geschaltete Kapazität C1 entladen, so dass die Spannung über dem Halbleiterschalter S1 auf den Wert Null sinkt. Erreicht diese Spannung den Wert Null, beginnt die antiparallel zu dem Halbleiterschalter S1 geschaltete Diode D1 zu leiten und der Halbleiterschalter S1 kann durch ein Nullspannungsschalten eingeschaltet werden. Das Entladen der Kapazität C1 geht mit einem Aufladen der Kapazität C2 einher. Bei geschlossenem Koppelschalter S5 muss zudem die parallel zu Koppelschalter S5 geschaltete Kapazität C5 je nach Ladezustand entladen oder aufgeladen werden. Für den Umladevorgang der Kapazitäten C1 und C2 sowie gegebenenfalls der Kapazität C5 ist ein ausreichend großer positiver Eingangsstrom $i_{L1}$ der Eingangshalbbrücke 201 erforderlich. Im Hochsetzstellerbetrieb der Eingangshalbbrücke 201 nimmt der Strom $i_{L1}$ seinen Maximalwert $i_{L1,max}$ an, wenn der Strom $i_{L1}$ von der unteren Spannungsschiene 204 auf die obere Spannungsschiene 203 kommutiert wird. Aus der Forderung, dass der Mittelwert des Stroms $i_{L1}$ gleich dem Eingangsstrom $i_{ein}$ des Gleichstromstellers ist,

folgt dabei, dass $i_{L1,max}$ den Wert 2. $i_{ein}$ - $i_{L1,min}$ = $2 \cdot i_{ein} + I_m$ hat und insoweit ausreichend groß ist, um den erforderlichen Umladevorgang der Kapazitäten C1, C2 und gegebenenfalls C5 durchführen zu können.

Um die Eingangshalbbrücke 201 nach dem Resonant-Pole-Verfahren betreiben zu können, gilt somit

$$i_{L1,\mathrm{max}} \geq 2 \cdot I_{in} + I_m \qquad (3)$$

$$i_{L1,\mathrm{min}} \leq -I_m , \qquad (4)$$

Hieraus folgt, dass die Eingangshalbbrücke höchstens mit der Frequenz

$$f_{SW} = \frac{U_{DC} \cdot (1 - a_{S1}) \cdot a_{S1}}{\Delta i_{L1} \cdot L1} \qquad (5)$$

arbeiten sollte, wobei mit $\Delta i_{L1} = i_{L1,max} - i_{L1,min}$ die Welligkeit des Stroms $i_{L1}$ bezeichnet ist. Die Ausgangshalbbrücke 202 des Gleichstromstellers wird vorzugsweise mit derselben Frequenz betrieben wie die Eingangshalbbrücke 201. Im Allgemeinen die Frequenz der Ausgangshalbbrücke 202 jedoch so gewählt werden, dass die Frequenz der Eingangshalbbrücke 201 ein ganzzahliges Vielfaches der Frequenz der Ausgangshalbbrücke 202 ist..

Würde die Ausgangshalbbrücke 202 des Gleichstromstellers betrieben, ohne dass der Koppelschalter S5 eingeschaltet wird, führen analoge Überlegungen, wie zuvor in Bezug auf die Eingangshalbbrücke 201 angestellt, zu dem Ergebnis, dass die Welligkeit $\Delta i_{L2} = i_{L2,max} - i_{L2,min}$ des Ausgangsstroms $i_{L2}$, d.h. die Differenz zwischen seinem Maximalwert $i_{L2,max}$ und seinem Minimalwert $i_{L2,min}$, relativ groß sein müsste, um weiches Einschalten der Halbleiterschalter S3 und S4 nach dem Resonant-Pole-Verfahren zu ermöglichen. Daher müsste insbesondere eine relativ kleine Induktivität L2 verwendet werden, die zu höheren Leitungsverlusten führt.

Wie im Folgenden noch genauer erläutert wird, kann ein weiches Einschalten der Halbleiterschalter S3 und S4 der Ausgangshalbbrücke 202 bei dem in Figur 2 dargestellten Gleichstromsteller dadurch erreicht werden, dass während einer Kommutierungsphase, die mit einem ansonsten hart schaltenden Einschalten eines Halbleiterschalters S3, S4 der Ausgangshalbbrücke 202 verbunden wäre, der Koppelschalter S5 eingeschaltet wird, um den Kommutierungsvorgang durch den Eingangsstrom $i_{L1}$ zu unterstützen. Somit kann bei dem in Figur 2 dargestellten Gleichstromsteller eine größere Induktivität L2 eingesetzt werden, was zu geringen Leitungsverlusten führt. Zudem kann bei geeigneter Ansteuerung des Koppelschalters S5 ein Teil des Eingangsstroms $i_{L1}$ durch den Koppelschalter S5 zur Ausgangshalbbrücke 202 geführt werden, wodurch die Gesamtleitungsverluste in den Halbleiterschaltern S1-S5 verringert werden können.

Um Leitungsverluste innerhalb des Stromrichters möglichst zu minimieren und Nullspannungsschalten in der Ausgangshalbbrücke 202 zu ermöglichen, wird der Koppelschalter S5 in einer Ausgestaltung des Gleichstromstellers dann eingeschaltet, wenn sich die Eingangshalbbrücke 201 und die Ausgangshalbbrücke 202 in demselben Schaltzustand befinden, d.h., wenn beide oberen Halbleiterschalter S1 und S3 der Eingangshalbbrücke 201 und der Ausgangshalbbrücke 202 eingeschaltet bzw. ausgeschaltet sind. Hierdurch wird auch vermieden, dass die Zwischenkreiskapazität $C_{DC}$ über den eingeschalteten Koppelschalter S5 kurzgeschlossen wird. Insbesondere wird der Koppelschalter S5 vorzugsweise gemäß der Gleichung

$$S5 = (S1 \cdot S3) + \overline{(\overline{S1} \cdot \overline{S3})} . \qquad (6)$$

angesteuert. In dieser Gleichung wird Si = 0 (i = 1, 3, 5) gesetzt, wenn der Halbleiterschalter Si ausgeschaltet ist, und es wird Si = 1 gesetzt, wenn der Halbleiterschalter Si eingeschaltet ist. Ferner ist $\overline{0} = 1$ und $\overline{1} = 0$. Falls der Halbleiterschalter S1, wie im Folgenden noch beschrieben wird, durch eine Diode D1' ersetzt ist, so muss in dieser Gleichung der Leitfähigkeitszustand der Diode D1' anstelle des Leitfähigkeitszustands des Halbleiterschalters S1 berücksichtigt werden. Grundsätzlich können auch andere Ansteuerungsregeln für den Halbleiterschalter S5 angewendet werden. Gleichung (6) gibt jedoch eine geeignete Ansteuerungsregel an, die eine besonders einfache Ansteuerung des Koppelschalters S5 ermöglicht.

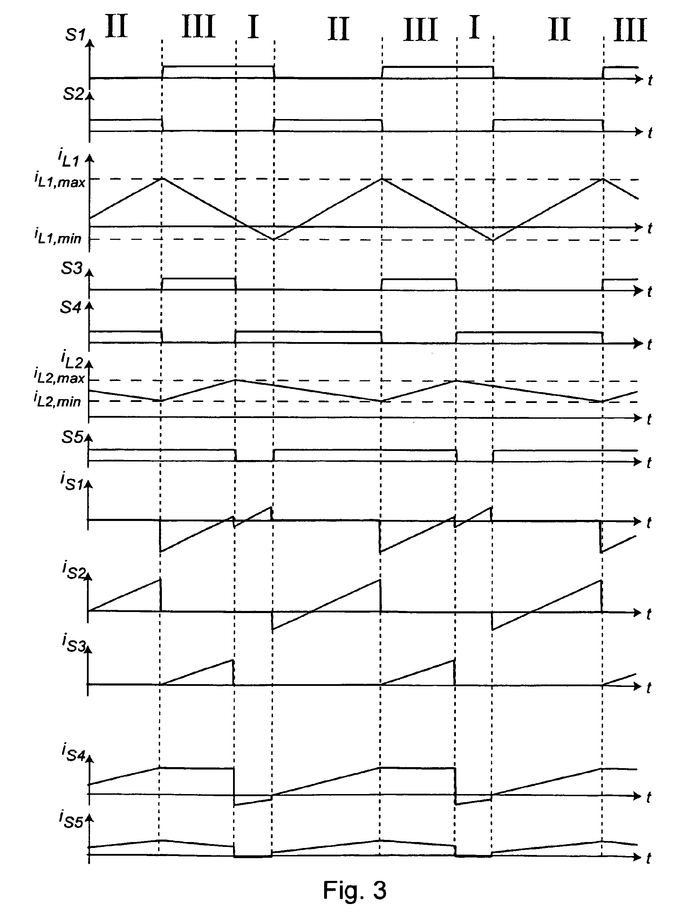

Im Folgenden wird der Betrieb des in Figur 2 dargestellten DC/DC-Wandlers an einem beispielhaft gewählten Arbeitspunkt unter Bezugnahme auf die in Figur 3 gezeigten Diagramme dargestellt. Dabei wird davon ausgegangen, dass die Eingangshalbbrücke 201 und die Ausgangshalbbrücke 202 mit der gleichen Frequenz betrieben werden, so dass drei zyklisch durchlaufene Betriebsphasen, die im Folgenden als Phase I, Phase II und Phase III bezeichnet werden, sowie die Übergänge zwischen diesen Phasen unterschieden werden. Die Betriebszustände der Halbleiterschalter S1-S4 und des Koppelschalters S5 bei einem Betrieb an dem gewählten Arbeitspunkt des Gleichstromstellers sind in Figur 3 angegeben. Wie zuvor zeigt dabei der Wert 0 an, dass der betreffende Halbleiterschalter ausgeschaltet ist, und der Wert 1 zeigt an, dass der Halbleiterschalter eingeschaltet ist. Neben den Schaltzuständen der Halbleiterschalter S1-S5 enthält die Figur 3 Diagramme, welche die zeitlichen Verläufe der Ströme $i_{L1}$ und $i_{L2}$ sowie der durch die Halbleiterschalter S1-S5 fließenden Ströme $i_{S1..5}$ wiedergeben. Die Richtungen, in denen die Ströme $i_{S1..5}$ positiv gezählt werden, sind dabei in Figur 2 anhand von Pfeilen angegeben.

In der Phase 1 ist der untere Halbleiterschalter S2 der Eingangshalbbrücke 201 ausgeschaltet. Der obere Halbleiterschalter S1 der Eingangshalbbrücke 201 ist eingeschaltet. Die Ausgangshalbbrücke 202 befindet sich im umgekehrten Schaltzustand. Hier ist der obere Halbleiterschalter S3 geschlossen, während der untere Halbleiterschalter S4 geöffnet ist. Der Koppelschalter S5 ist in der Phase I geschlossen, wodurch die Eingangsstufe 213 und die Ausgangsstufe 211 in der Phase I unabhängig voneinander arbeiten.

In der Eingangshalbbrücke 201 fließt der Strom $i_{L1}$, getrieben durch die Induktivität L1, über den eingeschalteten Halbleiterschalter S1 gegen die Spannung $U_{DC}$, die, wie zuvor erwähnt, größer als die Eingangsspannung $U_E$ ist. Dabei nimmt der Strom $i_{L1}$ ab und kehrt schließlich seine Richtung um, so dass er negativ wird und schließlich seinen Minimalwert $i_{L1,min}$ erreicht. Die Steigung des Stroms $i_{L1}$ beträgt während der Phase I $di_{L1}/dt = (U_E - U_{DC})/L1$. Die antiparallel zu dem Halbleiterschalter S1 geschaltete Freilaufdiode D1 befindet sich im leitenden Zustand solange der Strom $i_{L1}$ positiv ist.

In der Ausgangsstufe 202 fließt der Strom $i_{L2}$ in der Phase I durch die Induktivität L2, getrieben über den eingeschalteten Halbleiterschalter S4, und nimmt ausgehend von seinem Maximalwert $i_{L2,max}$ ab. Die negative Steigung des Stroms $i_{L2}$ in der Phase I beträgt $di_{L2}/dt = -U_A/L_2$. Die antiparallel zu dem Halbleiterschalter S4 geschaltete Diode D4 befindet sich in der Phase I im leitfähigen Zustand, da der Strom $i_{L2}$ positiv ist.

Am Ende der Phase I schaltet der Halbleiterschalter S1 den Strom $i_{L1}$ an seinem negativen Minimalwert $i_{L1,min}$ ab. Dies geschieht mit geringen Schaltverlusten, da der Abschaltvorgang durch die Kapazitäten C1, C2 und C5 entlastet wird. Nach dem Abschalten des Halbleiterschalters S1 lädt der negative Strom $i_{L1}$ die Kapazitäten C1, C2 und C5 während der Kommutierungsphase um. Dadurch sinkt das elektrische Potenzial am Mittelpunkt M1 der Eingangshalbbrücke 201 auf den Wert des elektrischen Potenzials der unteren Spannungsschiene 204, so dass die Spannung über dem Halbleiterschalter S2 auf den Wert Null sinkt. Ist dieser erreicht, geht die antiparallel zu dem Halbleiterschalter S2 geschaltete Diode D2 in den leitenden Zustand über, und der Halbleiterschalter S2 kann weich eingeschaltet werden. Gleichfalls kann der Koppelschalter S5 zu diesem Zeitpunkt weich eingeschaltet werden, da die Spannung über dem Koppelschalter S5 ebenfalls den Wert Null erreicht hat. In einer Ausführungsform erfolgt das Einschalten des Koppelschalters S5 und des Halbleiterschalters S2 daher synchron. In einer weiteren Ausführungsform wird der Koppelschalter S5 mit einer geringen Verzögerung eingeschaltet. Hierdurch wird auch dann sichergestellt, dass die Spannung über dem Koppelschalter S5 beim Einschalten den Wert Null erreicht hat, wenn der Halbleiterschalter S2 aufgrund einer ungenauen Ansteuerung zu früh eingeschaltet worden ist. Die Schaltzustände der Halbleiterschalter S3 und S4 der Ausgangshalbbrücke 202 werden während der Übergangsphase I → II nicht verändert.

In der Phase II ist der obere Halbleiterschalter S1 der Eingangshalbbrücke 201 ausgeschaltet, und der untere Halbleiterschalter S2 ist eingeschaltet. Der Schaltzustand der Ausgangsstufe 202 hat sich gegenüber der Phase I nicht verändert, so dass sich die Eingangshalbbrücke 201 und die Ausgangshalbbrücke 202 in der Phase II in demselben Schaltzustand befinden. Der Koppelschalter S5 wird in der Phase II im leitenden Zustand betrieben.

Der Eingangsstrom $i_{L1}$ nimmt in der Phase II ausgehend von seinen Minimalwert $i_{L1,min}$, zu und erreicht am Ende der Phase II seinen maximalen Wert $i_{L2,max}$. Die Steilheit des Stroms $i_{L1}$ während der Phase II beträgt $di_{L1}/dt = U_E/L_1$. Der Strom $i_{L2}$ nimmt in der Phase II weiter ab, und erreicht am Ende der Phase II seinen minimalen Wert $i_{L2,min}$. Die Steigung des Stroms $i_{L2}$ beträgt dabei wie in Phase I $di_{L2}/dt = -U_A/L_2$. Am Mittelpunkt M1 der Eingangshalbbrücke 201 verzweigt sich der Strom $i_{L1}$ in einen Zweig, in dem er über den oberen Halbleiterschalter S2 fließt, und einen Zweig, in dem er über den Koppelschalter S5 in den Mittelpunkt M2 der Ausgangsstufe 202 fließt. Dabei wird der Betrag der Stromstärke $i_{S4}$ des durch den Halbleiterschalter S4 fließenden Stroms um den Betrag des durch den Koppelschalter S5 fließenden Stroms $i_{S5}$ reduziert. Wie aus dem Diagramm in Figur 3 zu erkennen ist, nimmt dabei der durch den Koppelschalter S5 fließende Strom, der zum Leistungstransport von der Eingangshalbbrücke zu der Ausgangshalbbrücke beiträgt, während der Phase II zu. Der durch den Koppelschalter S5 fließende Strom $i_{S5}$ trägt zum Leistungstransport von der Eingangsseite zu der Ausgangsseite bei. Er reduziert den Betrag des durch den Halbleiterschalter S4 fließenden negativen Stroms $i_{S4}$ und den Betrag des durch den Halbleiterschalter S2 fließenden Stroms $i_{S2}$, der während des größeren Teils der Phase II positiv ist. Insgesamt werden dadurch die während der Phase II in dem Gleichstromsteller entstehenden Leitungsverluste reduziert.

Am Ende der Phase II werden die oberen Halbleiterschalter S2 und S4 der Eingangshalbbrücke 201 und der Ausgangshalbbrücke 202 ausgeschaltet. Die parallel zu den Halbleiterschaltern S1-S4 geschalteten Kapazitäten C1-C4 entlasten den Abschaltvorgang und ermöglichen ein weiches Ausschalten der Halbleiterschalter S2 und S4. Während der folgenden Kommutierungsphase II → III lädt der Strom $i_{L1}$ - $i_{L2}$ die Kapazitäten C1-C4 um. Dabei wird die Kapazität C1, wie zuvor erläutert, entladen, und die Kapazität C2 wird aufgeladen. Gleichermaßen wird die Kapazität C3 entladen, und die Kapazität C4 aufgeladen. Hierdurch steigt das elektrische Potenzial am Mittelpunkt M1 der Eingangshalbbrücke 201 beziehungsweise am Mittelpunkt M2 der Ausgangsstufe 202 auf das elektrische Potenzial der oberen Spannungsschiene 204,d.h., auf das obere Zwischenkreispotenzial. Wenn dieses erreicht ist, gehen die antiparallel zu dem Halbleiterschalter S1 geschaltete Diode D1 sowie die antiparallel zu dem Halbleiterschalter S3 geschaltete D3 in den leitenden Zustand über und die Halbleiterschalter S1 und S3 können durch ein Nullspannungsschalten eingeschaltet werden. Der Koppelschalter S5 wird während der Übergangsphase II → III und während der nachfolgenden Phase III im leitenden Zustand belassen.

In der Phase III sind die oberen Halbleiterschalter S1 und S3 der Eingangshalbbrücke 201 und der Ausgangsstufe 202 eingeschaltet, während die unteren Halbleiterschalter S2 und S4 ausgeschaltet sind. Der Koppelschalter S5 ist in der Phase III geöffnet.

Der Strom $i_{L1}$ nimmt in der Phase III, ausgehend von seinem Maximalwert $i_{L1,max}$, ab. Wie in der Phase I geschieht dies mit der negativen Steigung $di_{L1}/dt = (U_E - U_{DC})/L1$. Der Strom $i_{L2}$ steigt in der Phase III ausgehend von seinem Minimalwert $i_{L2,min}$ auf seinen Maximalwert $i_{L2,max}$. Die Steilheit des Stroms $i_{L2}$ beträgt dabei $di_{L2}/dt = (U_{DC} - U_A)/L2$. Wie dem Diagramm in Figur 3 zu entnehmen ist, ist der durch den Koppelschalter S5 fließende Strom $i_{S5}$ in der Phase III positiv und nimmt ab. Wie in der Phase II trägt dieser Strom zum Leistungstransport von der Eingangshalbbrücke 201 zu der Ausgangshalbbrücke 202 bei und verringert die Leitungsverluste.

Am Ende der Phase III werden der obere Halbleiterschalter S3 der Ausgangshalbbrücke 202 sowie der Koppelschalter S5 ausgeschaltet. Der Ausschaltvorgang wird durch die parallel zu den Halbleiterschaltern S3 und S4 der Ausgangshalbbrücke 202 geschalteten Kapazitäten C3 und C4 und die parallel zu dem Koppelschalter S5 geschaltete Kapazität C5 entlastet, wodurch ein weiches Ausschalten des Halbleiterschalters S3 erreicht wird. Während der Kommutierungsphase III → I lädt der positive Strom $i_{L2}$ die Kapazitäten C3 und C4 sowie C5 um, so dass das elektrische Potenzial am Mittelpunkt M2 der Ausgangshalbbrücke 202 auf das elektrische Potenzial der unteren Spannungsschiene 204 absinkt. Dabei wird die Kapazität C4 entladen, und die Kapazitäten C3 und C5 werden aufgeladen. Erreicht die Spannung über dem Halbleiterschalter S4 den Wert Null, geht die antiparallel zu dem Halbleiterschalter S4 geschaltete Diode D4 in den leitenden Zustand über und der Halbleiterschalter S4 kann durch Nullspannungsschalten eingeschaltet werden. Der obere Halbleiterschalter S1 der Eingangshalbbrücke 201 bleibt während der Übergangsphase III → I eingeschaltet und der untere Halbleiterschalter S2 der Eingangsstufe bleibt ausgeschaltet. Somit ist der Gleichstromsteller nach dem Einschalten des Halbleiterschalters S4 in die zuvor bereits beschriebene Phase I übergegangen.

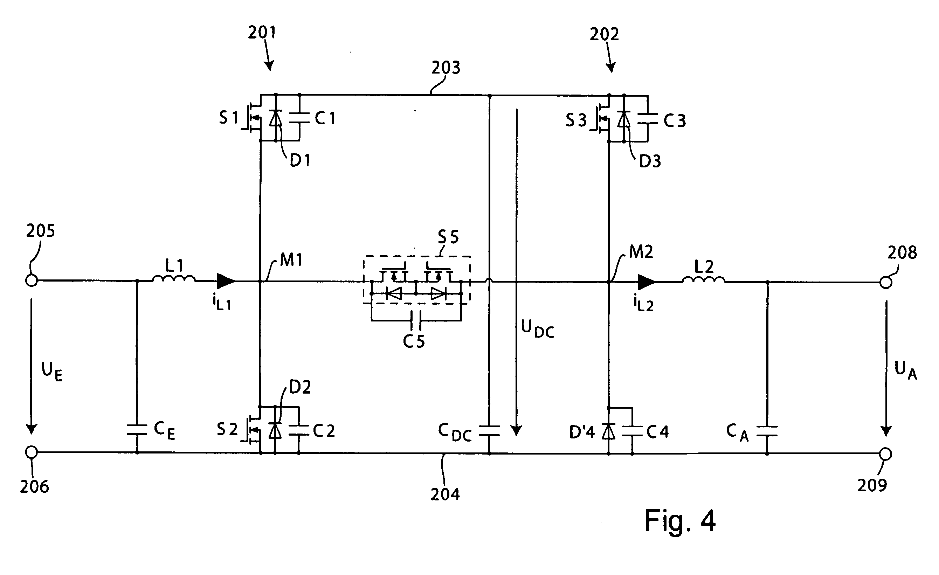

Wie aus der vorangegangenen Darstellung der Funktionsweise des in der Figur 2 dargestellten DC/DC-Wandlers deutlich wird, leitet die antiparallel zu dem Halbleiterschalter S4 geschaltete Freilaufdiode D4, wenn der Halbleiterschalter S4 geöffnet ist. Daher können der untere Halbleiterschalter S4 der Ausgangshalbbrücke 202 und die antiparallel geschaltete Freilaufdiode D4, wie in dem Schaltbild in Figur 4 dargestellt, durch eine Diode D4' ersetzt werden. Hierdurch wird insbesondere die Anzahl der zu schaltenden Halbleiterschalter verringert und die die Ansteuerung des Gleichstromstellers vereinfacht, so dass dieser kostengünstiger hergestellt und einfacher betrieben werden kann.

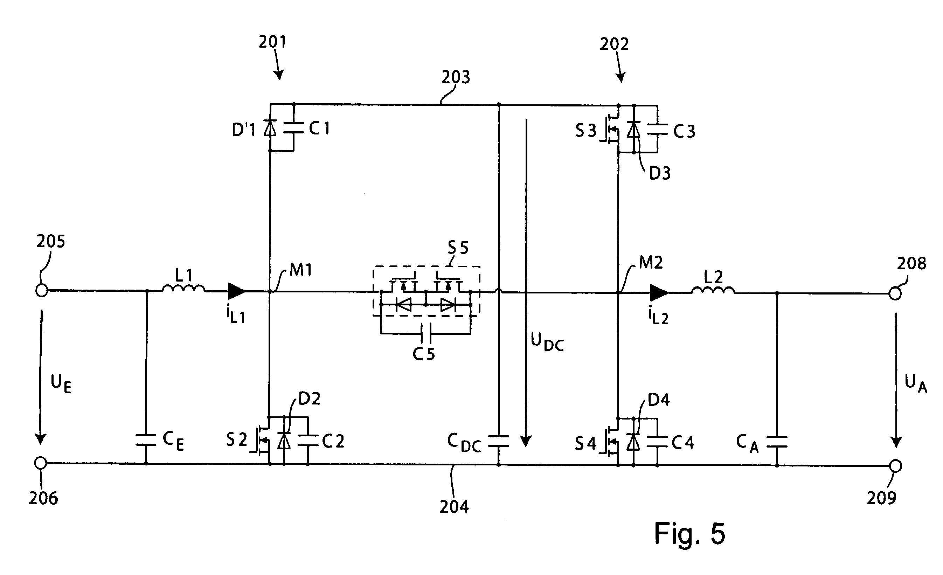

Zusätzlich oder alternativ ist es auch möglich, den Halbleiterschalter S1 und die antiparallel geschaltete Freilaufdiode D1 durch eine Diode D1' zu ersetzen, wie dies in dem Schaltbild in Figur 5 veranschaulicht ist. Aufgrund der Ventilwirkung der Diode D1' kann der Eingangsstrom $i_{L1}$ bei dieser Schaltungsanordnung jedoch nicht negativ werden. Somit kann der untere Halbleiterschalter S2 der Eingangshalbbrücke nicht mehr durch ein Nullspannungsschalten eingeschaltet werden. Allerdings ist ein Nullstromschalten beim Einschalten des Halbleiterschalters S2 möglich, wodurch die Einschaltverluste gleichfalls reduziert werden. Durch die Ersetzung des Halbleiterschalters S1 durch die Diode D1' wird gleichfalls die Anzahl der zu schaltenden Halbleiterschalter verringert und die Ansteuerung des Gleichstromstellers vereinfacht.

Beim zuvor beschriebenen Betrieb des in der Figur 2 dargestellten Gleichstromstellers an dem beispielhaft gewählten Arbeitspunkt ist der Ausgangsstrom $i_{L2}$ der Ausgangshalbbrücke 202 so eingestellt, dass er einen positiven Minimalwert $i_{L2,min}$ besitzt. Dies führt dazu, dass der Strom $i_{L2}$ bei der Kommutierung von der unteren Spannungsschiene 204 auf die obere Spannungsschiene 203 aufgrund seiner Richtung und Größe nicht dazu geeignet ist, die Kapazitäten C3 und C4 derart umzuladen, dass die Spannung über dem einzuschaltenden Halbleiterschalter S3 auf den Wert Null sinkt, der für ein weiches Einschalten erforderlich wäre. Ein Kommutierungsvorgang mit einem Einschalten des Halbleiterschalters S3 durch Nullspannungsschalten muss daher durch den Strom $i_{L1}$ unterstützt werden, der über den Koppelschalter S5 zum Mittelpunkt M2 der Ausgangshalbbrücke 202 geführt wird. Da für die Ansteuerung des Koppelschalters S5 die Gleichung (6) gilt, wird in diesem Fall, der im Folgenden als Fall 1 bezeichnet wird, die Kommutierung des Stroms $i_{L2}$ von dem unteren Halbleiterschalter S4 der Ausgangshalbbrücke 202 auf den oberen Halbleiterschalter S3 mit der Kommutierung des Stroms $i_{L1}$ von dem unteren Halbleiterschalter S2 der Eingangshalbbrücke 201 auf den oberen Halbleiterschalter S1 synchronisiert. Der dabei das erforderliche Umladen der Kapazitäten C1-C4 bewirkende Strom $i_{L1}$ - $i_{L2}$, der während dieser Kommutierungsphase näherungsweise den Wert $i_{L1,max}$ - $i_{L2,min}$ annimmt, muss dabei ausreichend positiv sein, um die parallel zu den oberen Halbleiterschaltern S1 und S3 geschalteten Kapazitäten C1 und C3 zu entladen die parallel zu den unteren Halbleiterschaltern S2 und S4 geschalteten Kapazitäten C2 und C4 aufzuladen. Wird der Strom, der beim Ausschalten eines Halbleiterschalters Si vorliegen muss, um die relevanten Kapazitäten derart umzuladen, dass eine Spannung über dem anderen Halbleiterschalter einer Halbbrücke bei einem Kommutierungsvorgang den Wert Null annimmt, mit $I_m(Si)$ bezeichnet, so muss näherungsweise gelten:

$$i_{L1,max} > i_{L2,min} + I_m(S2) + I_m(S4) \tag{7}$$

Ein Betrieb der Eingangshalbbrücke 201 nach dem Resonant-Pole-Verfahren ist hierbei entsprechend Gleichung (4) gewährleistet, wenn gilt:

$$i_{L1,min} < -I_m(S1) \tag{8}$$

Gleichfalls kann an einem Arbeitspunkt die Situation eintreten, dass der bei der Kommutierung des Stroms $i_{L2}$ von dem oberen Halbleiterschalter S3 der Ausgangshalbbrücke 202 auf den unteren Halbleiterschalter S4 der Ausgangshalbbrücke 202 auftretende Maximalwert $i_{L2,max}$ des Stroms $i_{L2}$ nicht ausreichend positiv ist, um die Kapazitäten C3 und C4 derart umzuladen, dass die Spannung über dem einzuschaltenden Halbleiterschalter S4 auf den Wert Null sinkt. In diesem Fall, der im Folgenden als Fall 2 bezeichnet wird, muss der Strom $i_{L1}$ bei diesem Kommutierungsvorgang über den Koppelschalter S5 zum Mittelpunkt M2 der Ausgangshalbbrücke 202 geführt werden, um den Kommutierungsvorgang zu unterstützen und ein Einschalten des Halbleiterschalters S4 durch Nullspannungsschalten zu ermöglichen. Um dies unter Beachtung der in Gleichung (6) angegebenen Ansteuerungsregel für den Koppelschalter S5 zu erreichen, wird in diesem Fall die Kommutierung des Stroms $i_{L2}$ von dem oberen Halbleiterschalter S3 der Ausgangshalbbrücke 202 auf den unteren Halbleiterschalter S4 mit der Kommutierung des Stroms $i_{L1}$ von dem oberen Halbleiterschalter S1 der Eingangshalbbrücke 201 auf den unteren Halbleiterschalter S2 synchronisiert. Der das erforderliche Umladen der Kapazitäten C1-C4 bewirkende Strom $i_{L1}$ - $i_{L2}$, der während dieser Kommutierungsphase näherungsweise den Wert $i_{L1,min}$-$i_{L2,max}$ annimmt, muss dabei ausreichend negativ sein, um die parallel zu den unteren Halbleiterschaltern S2 und S4 geschalteten Kapazitäten C2 und C4 zu entladen und die parallel zu den oberen Halbleiterschaltern S1 und S3 geschalteten Kapazitäten C1 und C3 aufzuladen. Dafür muss der Minimalwert $i_{L1,min}$ des Stroms $i_{L1}$ ausreichend kleiner sein als der Maximalwert $i_{L2,max}$ des Stroms $i_{L2}$. Näherungsweise muss insbesondere gelten:

$$i_{L1,min} < i_{L2,max} - I_m(S1) - I_m(S3) \tag{9}$$

Um einen Betrieb der Eingangshalbbrücke 201 nach dem Resonant-Pole-Verfahren sicherzustellen, muss näherungsweise gelten:

$$i_{L1,max} > I_m(S2) \tag{10}$$

Die zuvor am Beispiel eines Gleichstromstellers beschriebene Kopplung zwischen einer Eingangshalbbrücke 201 und einer Ausgangshalbbrücke 202 über einen Koppelschalter S5 kann mit denselben Vorteilen auch in Wechselrichterschaltungen und anderen Stromrichterschaltungen eingesetzt werden.

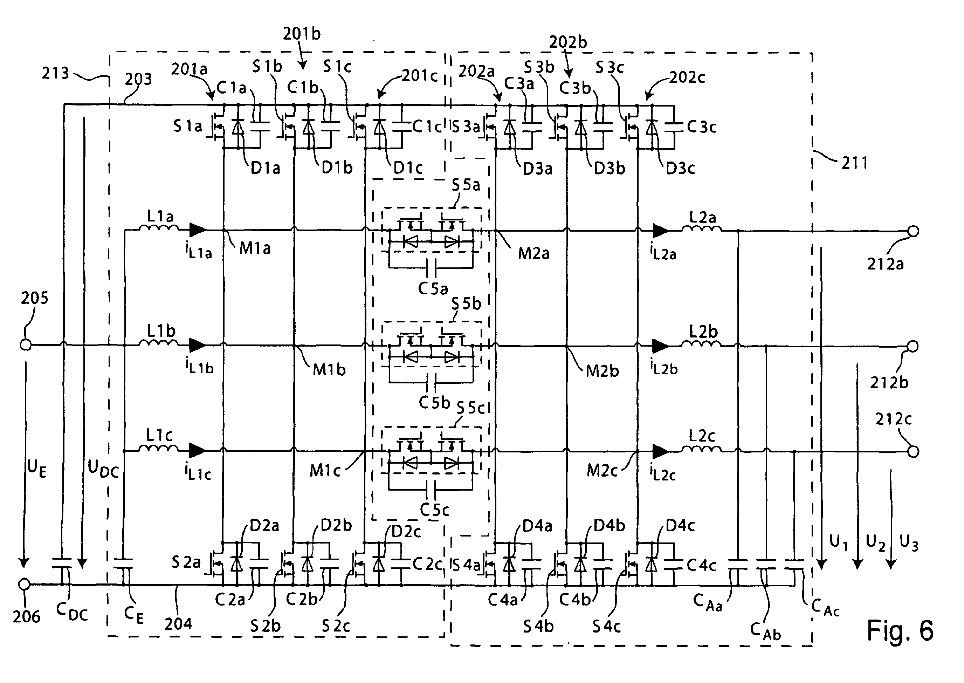

In Figur 6 ist eine Ausgestaltung einer entsprechenden dreiphasigen Wechselrichterschaltung veranschaulicht, mit der eine Eingangsgleichspannung $U_E$ in drei verschiedene Ausgangsspannungen $U_1$, $U_2$, $U_3$ oder eine dreiphasige Wechselspannung umgesetzt werden kann. Die Bauelemente dieser Schaltung sind in der zuvor beschriebenen Weise so ausgeführt wie bei dem in der Figur 2 dargestellten Gleichstromstellers.

Die Ausgangsstufe 211 der Wechselrichterschaltung umfasst in dieser Ausgestaltung drei parallel geschaltete Ausgangshalbbrücken 202a..c, die zwischen die oberen Spannungsschiene 203 und die untere Spannungsschiene 204 parallel zu der Zwischenkreiskapazität $C_{DC}$ geschaltet werden können. Die Ausgangshalbbrücken 202a..c umfassen dabei jeweils einen oberen Halbleiterschalter S3x und einen unteren Halbleiterschalter S4x, zwischen denen der Mittelpunkt M2x der Ausgangshalbbrücke 202x liegt (x = a,b,c). Die Mittelpunkte M2a..c sind über jeweils eine Induktivität L2x mit einem Anschluss 212x eines dreiphasigen Stromnetzes verbunden, bei dem es sich beispielsweise um ein Drehstromnetz handeln kann. Zu den Halbleiterschaltern S3a..c und S4a..c der Ausgangshalbbrücken sind Freilaufdioden D3a..c und D4a..c antiparallel sowie Kapazitäten C3a..c und C4a..c parallel geschaltet. Zur Glättung der Ausgangsspannungen U1, U2 und U3 sind Glättungskapazitäten $C_{Aa..c}$ vorgesehen, die bei der dargestellten Ausgestaltung der Schaltungsanordnung mit der unteren Spannungsschiene 204 verbunden sind.

Die Eingangsstufe 213 besteht ebenfalls aus drei parallel geschalteten Eingangshalbbrücken 201 a..c, die zwischen die obere Spannungsschiene 203 und die untere Spannungsschiene 204 geschaltet sind. Die Eingangshalbbrücken 201a..c umfassen jeweils den oberen Halbleiterschalter S1x und den unteren Halbleiterschalter S2x, wobei zu den Halbleiterschaltern S1x und S2x Freilaufdioden D1x und D2x antiparallel sowie Kapazitäten C1x und C2x parallel geschaltet sind (x = a,b,c). Die zwischen den Halbleiterschaltern S1a..c und S2a..c liegenden Mittelpunkte M1a..c der Eingangshalbbrücken 201a..c sind jeweils über eine Induktivität L1x mit dem Pol 205 der Eingangsspannung $U_E$ verbunden. Die untere Spannungsschiene 204 ist mit dem zweiten Pol 206 der Eingangsspannung $U_E$ verbunden. Zur Stützung der Eingangsspannung $U_E$ ist eine Kapazität $C_E$ vorgesehen.

Die Mittelpunkte M1 a..c der Eingangshalbbrücken 201 a..c sind jeweils über einen Koppelschalter S5x mit parallel geschalteter Kapazität C5x mit dem Mittelpunkt M2x einer zugeordneten Ausgangshalbbrücke 205x verbunden. Die Koppelschalter S5x sind bei der in der Figur 6 veranschaulichten Ausführungsform bidirektional ausgeführt.

Es ist ersichtlich, dass sich die in der Figur 6 dargestellte Wechselrichterschaltung aus drei Gleichstromstellerschaltungen des in Figur 2 veranschaulichten Typs zusammensetzt, wobei die Bauteile mit gleichem Index a, b bzw. c zu einer solchen Schaltung gehören. Die einzelnen Gleichstromstellerschaltungen werden dabei für sich in der zuvor beschriebenen Weise betrieben. Die drei Ausgangshalbbrücken 202a..c bilden einen dreiphasigen Wechselrichter und werden nach einem entsprechenden Steuerungsverfahren angesteuert. Insbesondere erfolgt die Ansteuerung dabei an Hand eines dem Fachmann bekannten Modulationsverfahrens zur Modulierung der Ausgangsspannung U1, U2 und U3 bzw. der Ausgangsströme $i_{L2a..c}$ der Ausgangshalbbrücken 202a..c. Im Inselbetrieb des Wechselrichters wird dabei eine Spannungsregelung vorgenommen. Wenn mittels des Wechselrichters ein Drehstromnetz gespeist wird, dann erfolgt vorzugsweise eine Stromregelung. In einer Ausgestaltung erfolgt die Ansteuerung der Ausgangshalbbrücken 202a..c beispielsweise pulsweitenmoduliert anhand der dem Fachmann bekannten Raumzeigermodulation.

Um ein weiches Schalten der Eingangshalbbrücken und der Ausgangshalbbrücken zu gewährleisten, erfolgt eine Ansteuerung für den Halbleiterschalter S5x zwischen einer Eingangshalbbrücke 201x und der zugeordneten Ausgangshalbbrücke 202x analog zu Gleichung (6) gemäß:

$$S5x = S1x \cdot S3x + \overline{S1x} \cdot \overline{S3x} \qquad (11)$$

Die Synchronisierung der Eingangshalbbrücke 201 x und der zugeordneten Ausgangshalbbrücke 202x erfolgt ebenfalls in der zuvor beschriebenen Weise, um zu gewährleisten, dass die Halbleiterschalter S3x und S4x der Ausgangshalbbrücke durch Nullspannungsschalten eingeschaltet werden können. Die Frequenzen der Eingangshalbbrücken 201 a..c und der Ausgangshalbbrücken 202a..c sind vorzugsweise gleich gewählt, und/oder die Frequenz der Ausgangshalbbrücken 202a..c wird so gewählt, dass die Frequenz der Eingangshalbbrücken 201 a..c ein ganzzahliges Vielfaches der Frequenz der Ausgangshalbbrücken 202a..c ist. Dabei können jedoch die Perioden der Ausgangshalbbrücken 201a..c, die benachbarten Phasen der dreiphasigen Ausgangsspannung speisen, bzw. die Perioden der zugeordneten Eingangshalbbrücken 201a..c, um das Drittel einer Periodendauer, d.h. um 120° in der Phase, gegeneinander verschoben werden, um die Spitzenbelastung der Zwischenkreiskapazität zu reduzieren.

Die näherungsweise erforderlichen Minimal- und Maximalwerte der Eingangsströme $i_{L1a..c}$ der Eingangshalbbrücken 201 a..c ergeben sich durch Kombination der Gleichungen (7)-(10) zu

$$i_{L1x,\min} < \begin{cases} i_{L2x,\max} - I_m(S1x) - I_m(S3x) & , i_{L2x,\max} < I_m(S3) \\ - I_m(S1x) & , i_{L2x,\max} > I_m(S3) \end{cases} \qquad (12)$$

$$i_{L1x,\max} > \begin{cases} I_m(S2x) & , i_{L2x,\min} < -I_m(S4) \\ i_{L2x,\min} + I_m(S2x) + I_m(S4x) & , i_{L2x,\min} > -I_m(S4) \end{cases} \qquad (13)$$

Diese Werte können insbesondere unter Verwendung von Gleichung (5) durch geeignete Wahl der Frequenzen der Eingangshalbbrücken 201 a..c bzw. der Ausgangshalbbrücken 202a..c eingestellt werden. Die oberen Zeilen der in den Gleichungen (12) und (13) vorgenommenen Fallunterscheidungen gelten für den zuvor beschriebenen Fall 1 und die unteren Zeilen für den zuvor beschriebenen Fall 2.

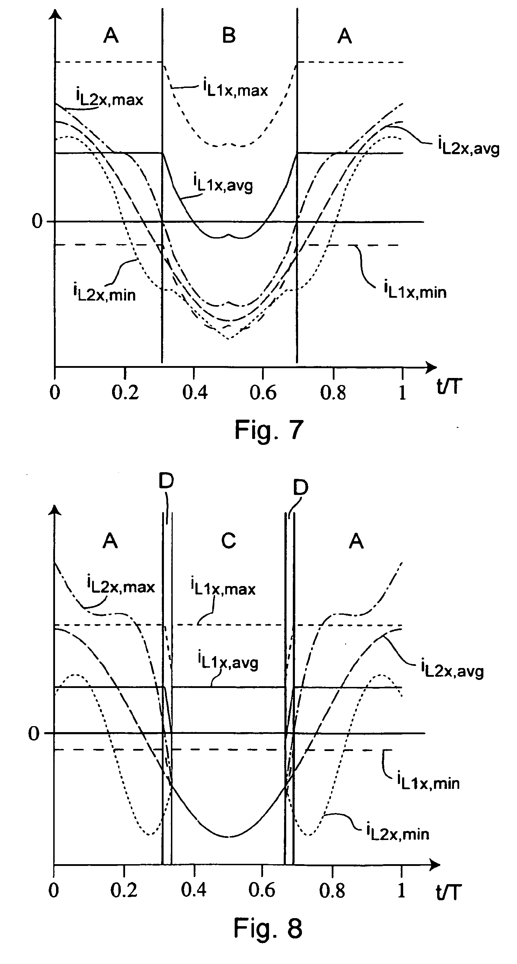

Beispielhaft sind in Figur 7 für eine Ausgangshalbbrücke 202x der Wechselrichterschaltung die zeitlichen Verläufe für den Mittelwert $1_{L2x,avg}$, den Maximalwert $i_{L2x,max}$ sowie den Minimalwert $i_{L2x,min}$ für eine Periodendauer T des Ausgangsstroms $i_{L2x}$ dargestellt, die sich bei einer Ansteuerung der Ausgangshalbbrücken 202a..c anhand der Raumzeigermodulation ergeben. Ferner sind für den Eingangsstrom $i_{L1x}$ der über einen Koppelschalter S5x mit der Ausgangshalbbrücke 202x verbundenen Eingangshalbbrücke 201x der Mittelwert $i_{L1x,avg}$, der Maximalwert $i_{L1x,max}$ und der Minimalwert $i_{L1x,min}$ dargestellt.

In den Bereichen A arbeiten die Ausgangshalbbrücke 202x und die zugeordnete Eingangshalbbrücke 201 x entsprechend dem zuvor beschriebenen Fall 1. Im Bereich B erfolgt aufgrund eines kleinen Wertes von $i_{L2,max}$ eine Ansteuerung entsprechend des zuvor genannten Falls 2. Daher sinkt im Bereich B der mittlere Wert des Eingangsstroms $i_{L1x}$ und wird an dem betrachteten Arbeitspunkt kurzzeitig sogar negativ. Hierdurch wird die Effizienz der Energieübertragung von der Eingangshalbbrücke 201 x zu der Ausgangshalbbrücke 202x verringert.

Dies kann durch die an sich bekannte, so genannte 120°-Flattop-Modulation verhindert werden, die beispielsweise in H. van der Broeck, "Analysis of Harmonics in Voltage Fed Inverter Drives caused by PWM Schemes with Discontinuous Switching Operation", EPE, Firenze, 1991 beschrieben wird. Die 120°-Flattop-Modulation zeichnet sich dadurch aus, dass jeweils eine Ausgangshalbbrücke 202x für ein Drittel der Periodendauer der Ausgangsspannungen bzw. - ströme des Wechselrichters nicht geschaltet wird, sondern entweder der obere Halbleiterschalter S3x dieser Ausgangshalbbrücke 202x eingeschaltet wird und den Mittelpunkt M2x dieser Ausgangshalbbrücke 202x mit der oberen Spannungsschiene 203 verbindet, oder der untere Halbleiterschalter S4x dieser Ausgangshalbbrücke 202x eingeschaltet ist und den Mittelpunkt M2x der Ausgangshalbbrücke M2x mit der unteren Spannungsschiene 204 verbindet. Als diejenige Ausgangshalbbrücke 202x, die nicht geschaltet wird, wird dabei jeweils die Ausgangshalbbrücke 202x gewählt, welche die kleinste Strangspannung liefert. Dies entspricht der Wahl eines minimal Nullsystems.

Durch eine pulsdauermodulierte Ansteuerung der Ausgangshalbbrücken 202a..c der Wechselrichterschaltung entsprechend der 120°-Flattop-Modulation wird das zuvor genannte Problem weitgehend vermieden, und die Effizienz der Energieübertragung erhöht. Grund hierfür ist, dass der zuvor genannte Fall 2 bei einer derartigen Modulation nur für eine kurze Zeitdauer während Periodendauer der Ausgangsspannungen $U_x$ bzw. Ausgangsströme $i_{L2x}$ auftritt. Während des weit überwiegenden Teils der Periodendauer, in dem der Fall 2 für eine Ausgangshalbbrücke 202x eintreten würde, muss diese Halbbrücke nämlich nicht geschaltet werden. Beispielhaft wird dies in dem Diagramm in der Figur 8 veranschaulicht, in dem für die Ausgangshalbbrücke 202x der Wechselrichterschaltung die zeitlichen Verläufe für den Mittelwert $i_{L2x,avg}$, den Maximalwert $i_{L2x,max}$ sowie den Minimalwert $i_{L2x,min}$ des Ausgangsstroms $i_{L2x}$ dargestellt sind. Ferner sind für den Eingangsstrom $i_{L1x}$ der über einen Koppelschalter S5x mit der Ausgangshalbbrücke 202x verbundenen Eingangshalbbrücke 201x die zeitlichen Verläufe des Mittelwert $i_{L1x,avg}$, des Maximalwert $iL_{1x,max}$ und des Minimalwert $i_{L1x,min}$ dargestellt. In dem Diagramm entsprechen die negativen Ausschläge der Werte von $i_{L1x,avg}$, $i_{L1x,max}$ und $i_{L1,min}$ in den Bereichen D einer Ansteuerung der Ausgangshalbbrücke 202x und der zugehörigen Eingangshalbbrücke 201x gemäß dem Fall 2. Der Bereich C ist das Flattop-Intervall, in dem die Ausgangshalbbrücke 202x nicht geschaltet wird, und die Bereiche A entsprechen wiederum einer Ansteuerung der Ausgangshalbbrücke 202x und der zugehörigen Eingangshalbbrücke 201 x entsprechend Fall 1.

Während der Ansteuerung der Ausgangshalbbrücke 202x und der zugehörigen Eingangshalbbrücke 201 x gemäß dem Fall 2, würde der Ladestrom $i_{L1x}$ der Zwischenkreiskapazität $C_{DC}$ absinken, was durch eine geeignete Regelung verhindert wird.

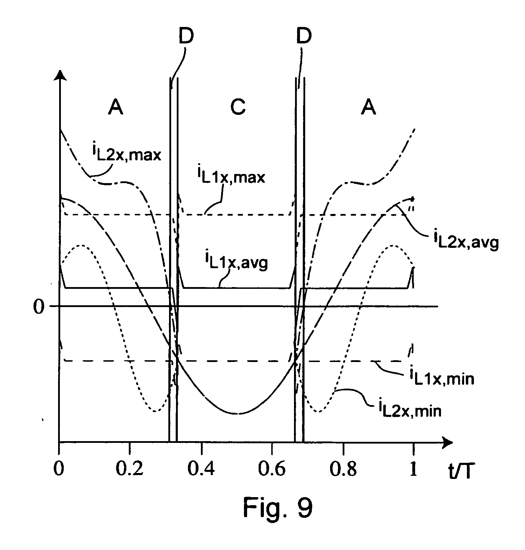

Bei einer Ansteuerung der Ausgangshalbbrücken 202a..c gemäß des 120°-Flattop-Verfahrens kommt es, wie zuvor erläutert, nur zu kurzeitigen Einbrüchen des. Diese werden in einer Ausgestaltung durch eine kurzzeitige Erhöhung des mittleren Eingangsstroms $i_{L1y}$ der übrigen Eingangshalbbrücke 201y kompensiert. Für diese Ausgestaltung sind in dem Diagramm in Figur 9 die zeitlichen Verläufe für den Mittelwert $i_{L2x,avg}$, den Maximalwert $i_{L2x,max}$ sowie den Minimalwert $i_{L2x,min}$ des Ausgangsstroms $i_{L2x}$ für die Ausgangshalbbrücke 202x der Wechselrichterschaltung dargestellt. Ferner sind für den Eingangsstrom $i_{L1x}$ der über einen Koppelschalter mit der Ausgangshalbbrücke verbundenen Eingangshalbbrücke die zeitlichen Verläufe des Mittelwerts $i_{L1x,avg}$, des Maximalwert$i_{L1x,max}$ und des Minimalwert $i_{L1x,min}$ dargestellt. Die positiven Ausschläge an den Rändern der Eingangsstromwerte entsprechen dabei der kurzzeitigen Erhöhung des mittleren Eingangsstroms $i_{L1x}$ der Eingangshalbbrücke 201x zur Kompensation eines Einbruchs eines von einer weiteren Eingangshalbbrücke 201 y gelieferten Ladestroms $i_{L1y}$. Die Erhöhung beträgt dabei die Hälfte der Verringerung des Stroms $i_{L1y}$ in der betreffenden Eingangshalbbrücke; die andere Hälfte wird von der dritten Eingangshalbbrücke geliefert, deren Eingangsstroms ebenfalls kurzzeitig erhöht wird. In einer weiteren Ausführungsform können die mittleren Eingangsströme $i_{L2a..c}$ der Eingangshalbbrücken 201 a..c über die gesamte Periodendauer der Ausgangsspannungen U1, U2, U3 erhöht werden, um die Kompensation vorzunehmen.

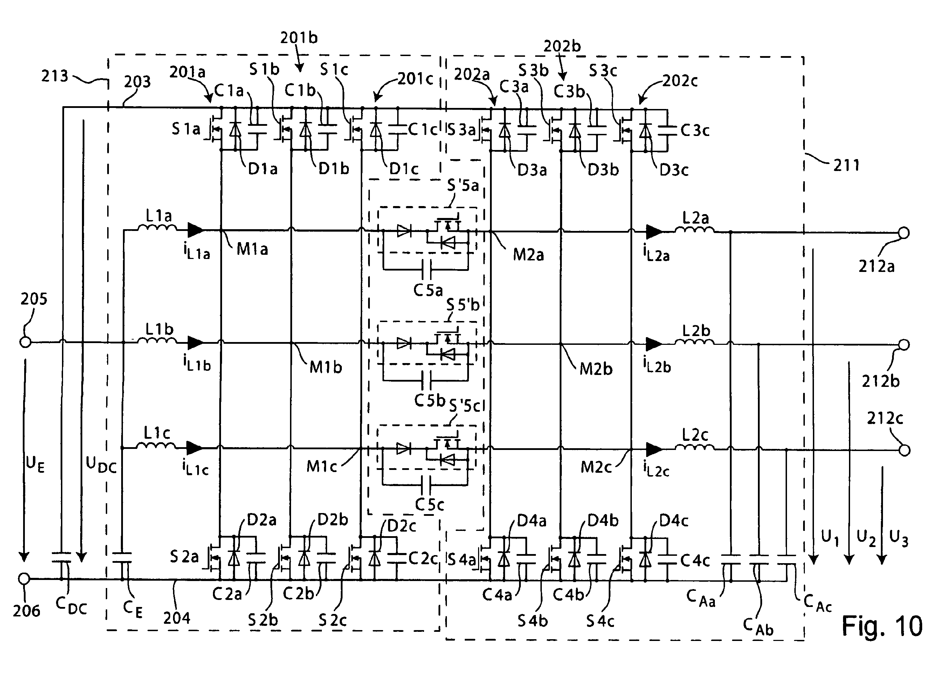

Bei einer Ansteuerung der Ausgangshalbbrücke 202x und der zugehörigen Eingangshalbbrücke 201x gemäß dem Fall 2 muss über den Koppelschalter S5x ein Strom vom Mittelpunkt M2x der Ausgangshalbbrücke 202x zum Mittelpunkt M1x der Eingangshalbbrücke 201x geführt werden, während der bei einem Betrieb gemäß dem Fall 1 über den Koppelschalter 205x geführte Strom von dem Mittelpunkt M1x der Eingangshalbbrücke 205 in den Mittelpunkt M2x der Ausgangshalbbrücke 202x fließt. Da bei einer Ansteuerung der Wechselrichterschaltung nach dem 120°-Flattop-Verfahren nur kurzzeitig ein Betrieb gemäß Fall 2 erforderlich ist, um ein weiches Schalten der Ausgangshalbbrücke 202x zu gewährleisten, werden in einer Ausführungsform der Wechselrichterschaltung unidirektionale Koppelschalter S5'a...c eingesetzt. Eine entsprechende Schaltungsanordnung mit ausgangsseitigem Wechselrichter und unidirektionalen Koppelschaltern S5'a..c ist dabei in Figur 10 veranschaulicht. Bei dieser Schaltungsanordnung erfolgt die Kommutierung der Ausgangsströme $i_{L2a..c}$ von den oberen Halbleiterschaltern S3a..c auf die unteren Halbleiterschalter S4a..c der Ausgangshalbbrücken 202a..c während jeder Periode der Ausgangsspannungen U1, U2, U3 zweimal für kurze Zeit im Rahmen eines hart geschalteten Kommutierungsvorgangs. Aufgrund des kurzzeitigen hart schaltenden Betriebs sind die Schaltverluste bei der in der Figur 9 dargestellten Schaltungsanordnung größer als bei der zuvor beschriebenen, in der Figur 6 dargestellten Schaltungsanordnung. Auf der anderen Seite wird in die Ansteuerung durch die Verwendung von unidirektionalen Koppelschaltern S5'a..c vereinfacht und damit kostengünstiger gestaltet.

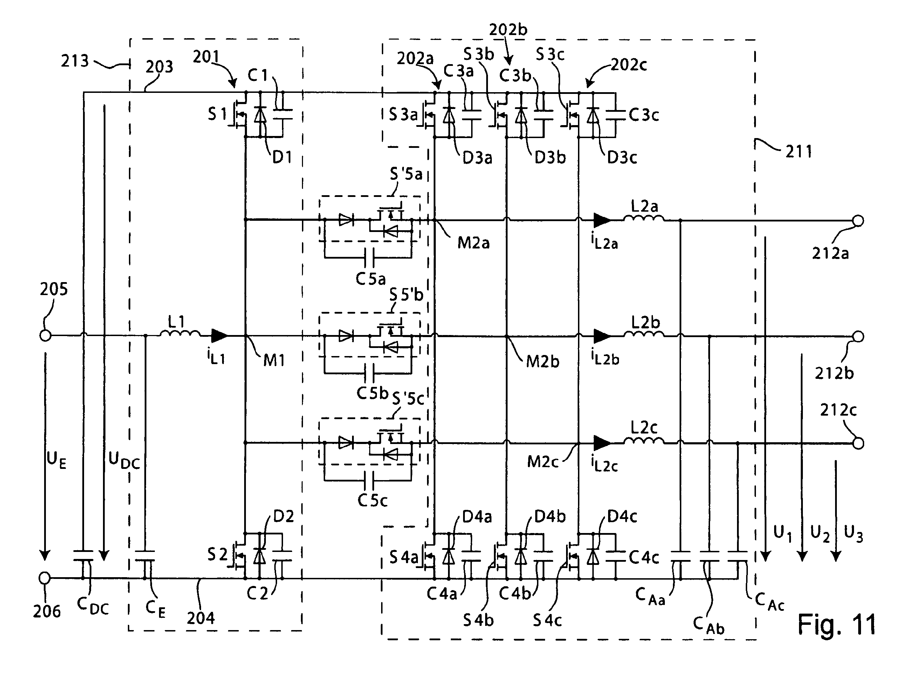

Eine weitere Ausgestaltung einer Wechselrichterschaltungsanordnung ist in Figur 11 anhand eines Schaltbilds veranschaulicht. Diese Schaltungsanordnung entspricht der in der Figur 10 dargestellten Schaltungsanordnung mit dem Unterschied, dass anstelle von drei Eingangshalbbrücken 201 a..c lediglich eine Eingangshalbbrücke 201 vorgesehen ist, die über die Induktivität L1 mit dem Pol 205 der Eingangsspannung $U_E$ verbunden ist. Die Mittelpunkte M2a..c der Ausgangshalbbrücken 202a..c sind dabei jeweils über einen unidirektionalen Koppelschalter S5'a..c mit dem Mittelpunkt M1 der Eingangshalbbrücke 201 verbunden.

Die Frequenzen, mit denen die Eingangshalbbrücke 201 und die Ausgangshalbbrücken 202a..c bei der in der Figur 10 veranschaulichten Wechselrichterschaltung geschaltet werden, sind vorzugsweise gleich, und/oder die Frequenz der Ausgangshalbbrücken 202a..c ist so gewählt, dass die Frequenz der Eingangshalbbrücke 201 ein ganzzahliges Vielfaches der Frequenz der Ausgangshalbbrücken 202a..c ist. Ferner sind Schaltperioden der Ausgangshalbbrücken 202a..c mit der Schaltperiode der Eingangshalbbrücke 201 synchronisiert. Die Welligkeit des Eingangsstroms $i_{L1}$ der Eingangshalbbrücke wird bei dieser Schaltungsanordnung vorzugsweise so eingestellt, dass der Minimalwert $i_{L1,min}$ positiv ist. Hierdurch ist es nicht möglich, den unteren Halbleiterschalter S2 der Eingangshalbbrücke 201 bei der Kommutierung des Eingangsstroms $i_{L1}$ von dem oberen Halbleiterschalter S1 auf den unteren Halbleiterschalter S2 durch ein Nullspannungsschalten einzuschalten. Daher wird das obere Schaltelement der Eingangshalbbrücke 201 analog zu der in der Figur 5 dargestellten Schaltungsanordnung vorzugsweise als eine Diode D1' ausgeführt. In einer Ausgestaltung handelt es sich dabei um eine SiC-Diode, die den Vorteil geringerer Schaltverluste aufweist. Durch den Einsatz einer derartigen Diode können somit Schaltverluste trotz des harten Schaltvorgangs relativ gering gehalten werden. Im Übrigen arbeitet die Schaltungsanordnung analog zu der zuvor beschriebenen in Figur 10 dargestellten Schaltungsanordnung, wobei die Mittelpunkte M2a..c der Ausgangshalbbrücken 202a..c über die den Ausgangshalbbrücken 202a..c zugeordneten Koppelschalter S5'a..c mit der einzigen Eingangshalbbrücke 201 verbunden werden anstatt mit der zugeordneten Einganghalbbrücke 205a..c. Durch den Einsatz einer einzigen Eingangshalbbrücke 201 kann der Wechselrichter und seine Ansteuerung deutlich vereinfacht werden. Ferner kann die Welligkeit des Eingangsstroms $i_{L1}$ der Eingangshalbbrücke 201 bei dieser Ausgestaltung der Wechselrichterschaltung reduziert werden, wodurch die Leitungsverluste herabgesetzt werden können.

Der einer Ausgangshalbbrücke 202x zugeordnete Koppelschalter S5x wird bei positivem Ausgangsstrom $i_{L2x}$ der Ausgangshalbbrücke 202x dann im leitenden Zustand betrieben, wenn der Ausgangsstrom $i_{L2x}$ der Ausgangshalbbrücke 202x von der unteren Spannungsschiene 204 auf die obere Spannungsschiene 203 kommutiert. Hierdurch wird ein weiches Einschalten des oberen Halbleiterschalters S3x und ein weiches Ausschalten des unteren Halbleiterschalters S4x gewährleistet. Bei negativem Ausgangsstrom $i_{L2x}$ der Ausgangshalbbrücke 202x wird der zugeordnete Koppelschalter S5x dann im leitenden Zustand betrieben, wenn der Ausgangsstrom $i_{L2x}$ der Ausgangshalbbrücke 202x von der oberen Spannungsschiene 203 auf die untere Spannungsschiene 204 kommutiert, um ein weiches Einschalten des unteren Halbleiterschalters S4x und ein weiches Ausschalten des oberen Halbleiterschalters S3x zu gewährleisten. Die durch den Koppelschalter S5x fließenden Ströme haben in den beiden zuvor genannten Fällen verschiedene Vorzeichen, daher sind im vollständig weich schaltenden Betrieb des aus den Ausgangshalbbrücken 202a..c bestehenden Wechselrichters bidirektionale Koppelschalter S5a..c erforderlich.

Eine Synchronisierung der Ausgangshalbbrücken 202a..c und der Eingangshalbbrücke 201 wird bei der in der Figur 11 veranschaulichten Schaltungsanordnung in der zuvor beschriebenen Weise vorgenommen, d.h., die Koppelschalter S5a..c sind eingeschaltet, wenn sowohl die oberen Halbleiterschalter S3a..c der Ausgangshalbbrücken 202a..c als auch die Diode D1' der Eingangshalbbrücke leitend geschaltet sind. Hierfür werden die Schaltperioden der Ausgangshalbbrücken 202a..c phasengleich gewählt.

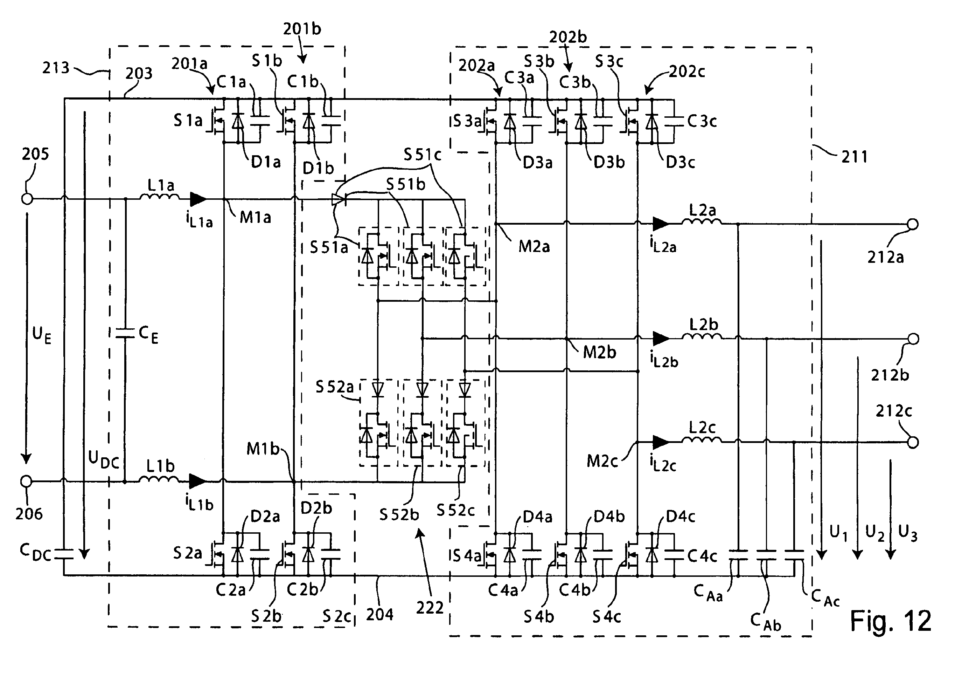

In Figur 12 ist eine weitere Ausgestaltung einer dreiphasigen Wechselrichterschaltung veranschaulicht. Die Ausgangsstufe 211 dieser Schaltungsanordnung entspricht den Ausgangsstufen 211 der zuvor beschriebenen Wechselrichterschaltungen und umfasst eine Anordnung von Ausgangshalbbrücken 202a..c die parallel zu der Zwischenkreiskapazität $C_{DC}$ zwischen die obere Spannungsschiene 203 und die untere Spannungsschiene 204 geschaltet sind. Die Mittelpunkte M2a..c der Ausgangshalbbrücken 202a..c sind über jeweils eine Induktivität L2x mit den Anschlüssen 212a..c eines dreiphasigen Stromnetzes verbunden. Die Ausgangshalbbrücken 202a..c werden dabei im Wechselrichterbetrieb angesteuert.

Die Eingangsstufe 213 der Wechselrichterschaltungsanordnung umfasst zwei parallel geschaltete Eingangshalbbrücken 201a,b des zuvor beschriebenen Typs, die zwischen die obere Spannungsschiene 203 und die untere Spannungsschiene 204 parallel zu der Zwischenkreiskapazität $C_{DC}$ geschaltet sind. Die Mittelpunkte M1a..c der Eingangshalbbrücken sind jeweils über eine Induktivität L1a,b mit einem Pol 205, 206 einer Eingangsspannung $U_E$ verbunden. Zur Stützung der Eingangsspannung $U_E$ ist wiederum eine parallel zu der Eingangsspannung $U_E$ geschaltete Kapazität $C_E$ vorgesehen.

Die Eingangshalbbrücke 201 a, deren Mittelpunkt M1 a mit dem auf höherem elektrischen Potenzial liegenden Pol 205 der Eingangsspannung $U_E$ verbunden ist, arbeitet bei der dargestellten Schaltungsanordnung im Hochsetzstellerbetrieb, während die Eingangshalbbrücke 201a, deren Mittelpunkt M1b mit dem anderen Pol 206 der Eingangsspannung $U_E$ verbunden ist, im Tiefsetzstellerbetrieb arbeitet. Beide Eingangshalbbrücken 201 a, 201 b werden in der zuvor beschriebenen Weise nach dem oben beschriebenen Resonant-Pole-Verfahren betrieben. Um Leistung in den aus der Zwischenkreiskapazität bestehenden Zwischenkreis einzuspeisen, ist dabei der Eingangsstrom $i_{L1a}$ der Eingangshalbbrücke 201a im Mittel positiv und der Eingangsstrom $i_{L2b}$ der Eingangshalbbrücke 201 b im Mittel negativ. Durch eine geeignete Wahl der Induktivitäten L1a und L1 b sowie der Frequenz der Eingangshalbbrücken 201 a, 201 b wird dabei erreicht, dass der Minimalwert des Eingangsstroms $i_{L1a}$, der bei der Kommutierung des Stroms $i_{L1a}$ von dem oberen Halbleiterschalter S1a auf den unteren Halbleiterschalter S2a der Eingangshalbbrücke 201 a vorliegt, ausreichend negativ ist, um den unteren Halbleiterschalter S2a durch Nullspannungsschalten einzuschalten. Ferner wird der Maximalwert des Stroms $i_{L1b}$, der bei der Kommutierung des Stroms $i_{L1b}$ von dem unteren Halbleiterschalter 201 b auf den oberen Halbleiterschalter 202b vorliegt, so eingestellt, dass er ausreichend positiv wird, um ein Einschalten des oberen Halbleiterschalters S1b durch Nullspannungsschalten zu ermöglichen. Die Richtungen der Ströme werden dabei so gewählt, wie in der Figur 12 durch Pfeile veranschaulicht. Gleichfalls können die zuvor genannten Kommutierungsvorgänge auch mit einem harten Einschalten des betreffenden Halbleiterschalters S2a bzw. S1 b verbunden werden. In diesem Fall kann der Eingangsstrom $i_{L1a}$ der Eingangshalbbrücke 201a dauerhaft positiv gewählt werden, und der Eingangsstrom $i_{L1b}$ kann dauerhaft negativ gewählt werden. Dabei können die Welligkeiten der Eingangströme $i_{L1a}$ und $i_{L1b}$ der Eingangshalbbrücken 201a,b klein gewählt werden, wodurch größere Induktivitäten L1a,b mit geringeren Leitungsverlusten eingesetzt werden können. Um dabei die beim harten Einschalten entstehenden Schaltverluste zu minimieren, werden die Halbleiterschalter S2a und S1 b und ihre antiparallel geschalteten Freilaufdioden in einer Ausgestaltung durch Dioden ersetzt, insbesondere durch SiC-Dioden, die niedrige Schaltverluste aufweisen.

Über ein Koppelnetzwerk 222 sind die Mittelpunkte M2a..c der Ausgangshalbbrücken 202a..c mit den Mittelpunkten M1 a,b der Eingangshalbbrücken 201 a..b verbunden. Das Koppelnetzwerk 222 ist so aufgebaut, dass die Mittelpunkte M2a..c der Ausgangshalbbrücken 202a..c jeweils mit dem Mittelpunkt M1a der im Hochsetzstellerbetrieb arbeitenden Eingangshalbbrücke 201a über einen unidirektionalen Koppelschalter S51x (x= a, b, c) verbunden sind, der im eingeschalteten Zustand einen (positiven) Stromfluss von dem Mittelpunkt M1a der Eingangshalbbrücke 201 a in den Mittelpunkt M2x der betreffenden Ausgangshalbbrücke 202x ermöglicht. Ferner sind die Mittelpunkte M2a..c der Ausgangshalbbrücken 202a..c jeweils mit dem Mittelpunkt M1b der im Tiefsetzstellerbetrieb arbeitenden Eingangshalbbrücke 201 b über einen unidirektionalen Koppelschalter S52x (x= a, b, c) verbunden, der im eingeschalteten Zustand einen (positiven) Stromfluss von dem Mittelpunkte M2x der betreffenden Ausgangshalbbrücke 202x in den Mittelpunkt M1a der Eingangshalbbrücke 201 b ermöglicht. Die parallel zu den Koppelschaltern S51 a..c und S52a..c geschalteteten Kapazitäten sind aus Gründen der Übersichtlichkeit in Figur 12 nicht dargestellt.

Die Frequenzen, mit denen die Eingangshalbbrücken 201 a,b und die Ausgangshalbbrücken 202a..c geschaltet werden, werden gleich gewählt. Ferner sind die Perioden der Eingangshalbrücken 201a,b und der Ausgangshalbbrücken 202a..c vorzugsweise synchronisiert.

Die im Hochsetzstellerbetrieb arbeitende Eingangshalbbrücke 201 a ist insbesondere dazu in der Lage, dem Mittelpunkt M2x einer Ausgangshalbbrücke 202x Strom zuzuführen. Daher wird eine Ausgangshalbbrücke 202x im Zusammenwirken mit der Eingangshalbbrücke gemäß dem zuvor beschriebenen Fall 1 betrieben, wenn der Strom $i_{L2x}$ bei der Kommutierung von dem unteren Halbleiterschalter S4x auf den oberen Halbleiterschalter S3x nicht ausreichend negativ ist, um die Kapazitäten C3x und C4x derart umzuladen, dass die Spannung über dem einzuschaltenden Halbleiterschalterschalter S3x auf den Wert Null sinkt, der für ein weiches Einschalten erforderlich wäre. Solange dies der Fall ist, wird der Koppelschalter in einer Ausgestaltung S51x entsprechend der Gleichung

$$S51x = (S1a \cdot S3x) + \overline{(\overline{S1a} \cdot \overline{S3x})} \qquad (14)$$

betrieben. Der Koppelschalter S52x bleibt geschlossen, solange die zuvor genannte Bedingung erfüllt ist. Die zuvor genannte Kommutierung ist dabei mit der Kommutierung des Eingangsstroms $i_{L1a}$ der Eingangshalbbrücke von dem unteren Halbleiterschalter S2a auf den oberen Halbleiterschalter S1a bzw. die entsprechende Diode synchronisiert

Die im Tiefsetzstellerbetrieb arbeitende Eingangshalbbrücke 201 b ist insbesondere dazu in der Lage, Strom vom Mittelpunkt M2x einer Ausgangshalbbrücke 202x abzuführen. Daher wird eine Ausgangshalbbrücke 202x im Zusammenwirken mit der Eingangshalbbrücke gemäß dem zuvor beschriebenen Fall 2 betrieben, wenn der bei der Kommutierung des Stroms $i_{L2x}$ von dem oberen Halbleiterschalter S3x der Ausgangshalbbrücke 202x auf den unteren Halbleiterschalter S4x der Ausgangshalbbrücke 202x auftretende Maximalwert $i_{L2,max}$ des Stroms $i_{L2x}$ nicht ausreichend positiv ist, um die Kapazitäten C3 und C4 derart umzuladen, dass die Spannung über dem einzuschaltenden Halbleiterschalter S4 auf den Wert Null sinkt. Solange dies der Fall ist, wird der Koppelschalter S52x entsprechend der Gleichung

$$S52x = (S2b \cdot S4x) + \overline{(\overline{S2b} \cdot \overline{S4x})} \qquad (15)$$

betrieben. Der Koppelschalter S52x bleibt geschlossen, solange die zuvor genannte Bedingung erfüllt ist. Die zuvor genannte Kommutierung ist dabei mit der Kommutierung des Eingangsstroms $i_{L1b}$ der Eingangshalbbrücke 201 b von dem oberen Halbleiterschalter S1a auf den unteren Halbleiterschalter S2a bzw. die entsprechende Diode synchronisiert.

Der in der Figur 12 dargestellte Wechselrichter ermöglicht einen weich schaltenden Betrieb aller Halbleiterschalter bei Verwendung eines beliebigen Modulationsschemas zur Ansteuerung der Ausgangshalbbrücken 202a..c. Ferner wird die, bei der in der Figur 6 dargestellten Wechselrichterschaltung auftretende Verringerung des mittleren Eingangsstroms $i_{L1a}$ vermieden.

Den zuvor dargestellten Wechselrichterschaltungen ist gemeinsam, dass sie aufgrund der weich schaltenden Betriebsmodi eine sehr effiziente Energieübertragung ermöglichen. Ferner kann die Eingangsspannung in einem sehr weiten Bereich variiert werden. Daher eignen sie sich besonders gut für die Einspeisung einer in einem Photovoltaikgenerator, einer Brennstoffzelle oder einer Windkraftanlage erzeugten Energie in ein Stromnetz. Gleichfalls kann die Schaltung auch durch einen Generator oder Batterie gespeist werden. Vorteilhaft kann mit der Schaltungsanordnung insbesondere ein Motor, beispielsweise ein Synchron- oder Asynchronmotor, mit Energie versorgt werden.

Bei Verwendung von bidirektionalen Koppelschaltern können die Schaltungsanordnungen bidirektional betrieben werden, d.h., Leistung kann sowohl von der Ausgangsstufe zur Eingangsstufe als auch umgekehrt transportiert werden. Vorteilhaft ist die Schaltungsanordnung so ausgeführt, dass ein bidirektionaler Betrieb möglich ist. Bei einem bidirektionalen Betrieb können die Ausgangshalbbrücken, die in den zuvor beschriebenen Ausgestaltungen als Wechselrichter arbeiten, als Gleichrichter betrieben werden.

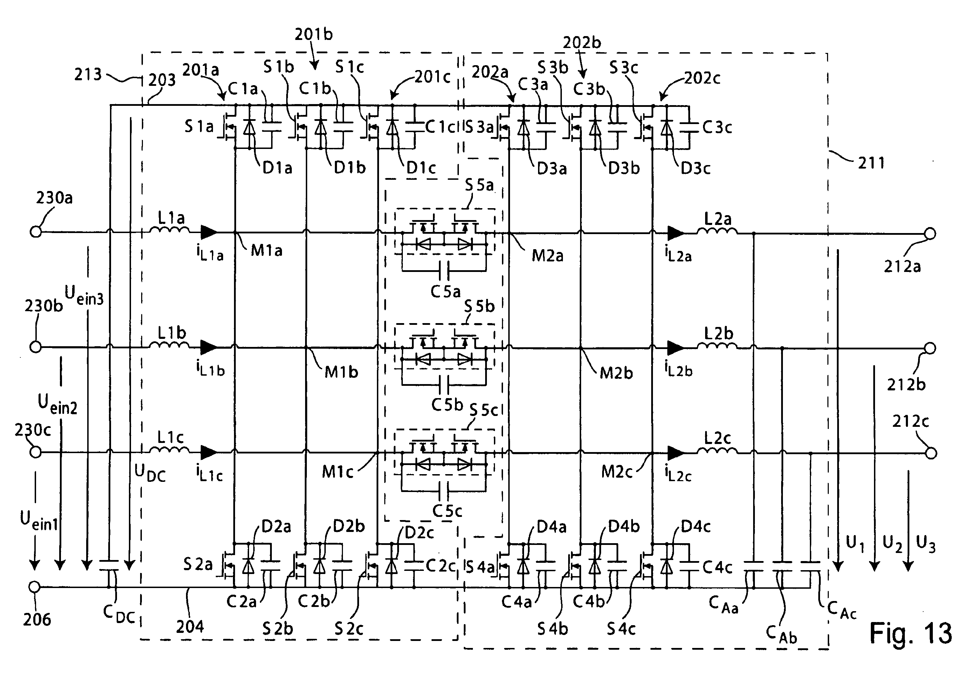

In Figur 13 ist eine Ausgestaltung einer Schaltungsanordnung dargestellt, die als Umrichter betrieben werden kann, um eine dreiphasige Eingangswechselspannung $U_{ein1}$, $U_{ein2}$, $U_{ein3}$ in eine dreiphasige Ausgangswechselspannung U1, U2, U2 mit veränderter Frequenz und/oder Phase umzusetzen. Die Schaltungsanordnung entspricht der in der Figur 6 gezeigten Wechselrichterschaltung mit dem Unterschied, dass die Mittelpunkte M1a..c der Eingangshalbbrücken 201a..c jeweils über eine Induktivität L1x mit einer Phase 230a,b,c der dreiphasigen Eingangswechselspannung verbunden sind. Die Schaltungsanordnung kann dabei analog zu der in Figur 6 dargestellten Schaltungsanordnung betrieben werden, wobei die Eingangshalbbrücken 201 a..c im Gleichrichterbetrieb angesteuert werden.

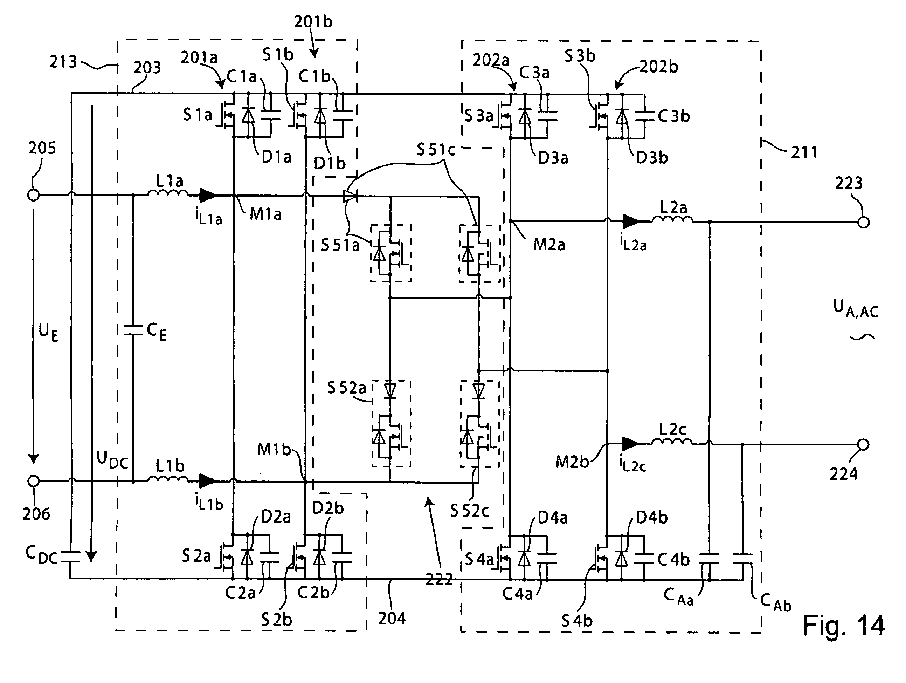

Der Fachmann erkennt zudem, dass analog zu den zuvor beschriebenen dreiphasigen Wechselrichterschaltungen einphasige Wechselrichter aufgebaut werden können. Als Beispiel ist dabei die in der Figur 12 dargestellte Wechselrichterschaltung in der Figur 14 in einer Ausführung als einphasige Wechselrichterschaltung dargestellt. Von dem in der Figur 12 dargestellten Wechselrichter unterscheidet sich der einphasige Wechselrichter dadurch, dass anstelle von drei Ausgangshalbbrücken 202a..c lediglich zwei Ausgangshalbbrücken 202a,b vorgesehen sind, deren Mittelpunkte über jeweils eine Induktivität L2x mit jeweils einem Wechselstromanschluss 223, 224 verbunden sind. Die Ausgangshalbbrücken 202a,b werden dabei nach einem geeigneten dem Fachmann bekannten Modulationsverfahren gesteuert, um eine gewünschte Wechselspannung $U_{A,AC}$ zu erzeugen.

**Patentansprüche**

1. Schaltungsanordnung zum Umsetzen einer Eingangsspannung ($U_E$) in eine Ausgangsspannung ($U_A$)

    - umfassend wenigstens eine Ausgangshalbbrücke (202) und wenigstens eine Eingangshalbbrücke (201), die parallel zu einer Zwischenkreiskapazität ($C_{DC}$) geschaltet sind,

    - wobei jede Halbbrücke (201; 202) ein oberes Brückenelement (S1, D1; C1; D1', C1; S3, D3, C3), ein unteres Brückenelement (S2, D2; C2; S4; D4, C4; D4', C4) und einen zugänglichen Mittelpunkt (M1; M2) zwischen dem oberen Brückenelement (S1, D1; C1; D1', C1; S3, D3, C3) und dem unteren Brückenelement (S2, D2; C2; S4; D4, C4; D4', C4) aufweist, wobei die Brückenelemente eine Parallelschaltung eines Schaltelements (S1, D1;

D1'; S2, D2; S3, D3; S4, D4; D4') und einer Kapazität (C1; C2; C3; C4) umfassen,
- wobei ein durch den Mittelpunkt (M1; M2) einer Halbbrücke (201; 202) fließender Strom ($i_{L1}$; $i_{L2}$) durch ein Schalten wenigstens eines Schaltelements der Brückenelemente der Halbbrücke (201; 202) von dem unteren Brückenelement auf das obere Brückenelement und umgekehrt kommutierbar ist,
- wobei der Mittelpunkt (M1) der Eingangshalbbrücke (201) über eine Eingangsinduktivität (L1) mit einem Eingangsspannungsanschluss (205) verbunden ist, und
- wobei der Mittelpunkt (M2) der Ausgangshalbbrücke (202) über eine Ausgangsinduktivität (L2) mit einem Ausgangsspannungsanschluss (208) verbunden ist,

**dadurch gekennzeichnet, dass** der Mittelpunkt (M1) der Eingangshalbbrücke (201) über einen Koppelschalter (S5; S5') mit dem Mittelpunkt (M2) der Ausgangshalbbrücke (202) verbunden ist.

2. Schaltungsanordnung nach Anspruch 1,
**dadurch gekennzeichnet,**
**dass** bei einer Kommutierung des durch den Mittelpunkt (M1; M2) einer Halbbrücke (201; 202) fließenden Stroms von einem ersten Brückenelement auf das zweite Brückenelement der Halbbrücke (201; 202) die Brückenelemente während einer Kommutierungsphase in einem Sperrzustand betrieben werden.

3. Schaltungsanordnung nach Anspruch 1 oder 2,
**dadurch gekennzeichnet,**
**dass** der Koppelschalter (S5; S5') während einer Kommutierung eines durch den Mittelpunkt (M2) der Ausgangshalbbrücke (202) in die Ausgangsinduktivität (L2) fließenden Ausgangsstroms ($i_{L2}$) von einem ersten Brückenelement auf ein zweites Brückenelement der Ausgangshalbbrücke (202) eingeschaltet wird, wenn der Ausgangsstrom ($i_{L2}$) nach Betrag und/oder Vorzeichen nicht geeignet ist, ein Entladen der Kapazität (C3; C4) des zweiten Brückenelements zu bewirken.

4. Schaltungsanordnung nach Anspruch 3,
**dadurch gekennzeichnet,**
**dass** ein während der Kommutierung durch die Eingangsinduktivität (L1) in den Mittelpunkt (M1) der Eingangshalbbrücke (201) fließender Eingangsstrom ($i_{L1}$) derart eingestellt wird, dass eine Differenz zwischen diesem Eingangsstrom ($i_{L1}$) und dem Ausgangsstrom ($i_{L2}$) nach Betrag und Vorzeichen geeignet ist, ein Entladen der Kapazität (C3; C4) des zweiten Brückenelements zu bewirken.

5. Schaltungsanordnung nach einem der vorangegangenen Ansprüche,
**dadurch gekennzeichnet,**
**dass** der Koppelschalter (S5') ausgeschaltet wird, wenn sich sowohl das obere Brückenelement (S1, D1; C1; D1', C1) der Eingangshalbbrücke (201) als auch das untere Brückenelement (S4, D4; C4; D4', C4) der Ausgangshalbbrücke (202) in einem leitenden Zustand befinden, oder wenn sich sowohl das untere Brückenelement (S2, D2; C2) der Eingangshalbbrücke (201) als auch das obere Brückenelement (S3, D3, C3) der Ausgangshalbbrücke (202) in einem leitenden Zustand befinden.

6. Schaltungsanordnung nach einem der vorangegangenen Ansprüche,
**dadurch gekennzeichnet,**
**dass** der Koppelschalter (S5, S5') nur dann eingeschaltet wird, wenn sich die oberen Brückenelemente (S1, D1; C1; D1', C1; S3, D3, C3) der Eingangshalbbrücke (201) und der Ausgangshalbbrücke (202) jeweils in einem leitenden Zustand oder in einem Sperrzustand befinden.

7. Schaltungsanordnung nach einem der vorangegangene Ansprüche,
**dadurch gekennzeichnet,**
**dass** eine Kommutierung des von dem Mittelpunkt (M2) der Ausgangshalbbrücke (202) in die Ausgangsinduktivität (L2) fließenden Ausgangsstroms ($i_{L2}$) von einem ersten Brückenelement auf ein zweites Brückenelement der Ausgangshalbbrücke (202), bei welcher der Koppelschalter (S5; S5) eingeschaltet wird, mit der Kommutierung des von der Eingangsinduktivität (L1) in den Mittelpunkt (M1) der Eingangshalbbrücke (201) fließenden Eingangsstroms ($i_{L1}$) von einem ersten Brückenelement auf ein zweites Brückenelement der Eingangshalbbrücke (201) synchronisiert wird, bei welcher der Eingangsstrom ($i_{L1}$) derart eingestellt ist, dass die Differenz zwischen dem Eingangsstrom ($i_{L1}$) und dem Ausgangsstrom ($i_{L2}$) nach Betrag und Vorzeichen geeignet ist, ein Entladen der Kapazität (C3; C4) des zweiten Brückenelements der Ausgangshalbbrücke zu bewirken.

8.  Schaltungsanordnung nach einem der vorangegangenen Ansprüche,
    **dadurch gekennzeichnet,**
    **dass** ein aus der Eingangsinduktivität (L1) in die Eingangshalbbrücke (201) fließender Strom so eingestellt wird, dass er während der Kommutierung von einem ersten Brückenelement auf ein zweites Brückenelement der Eingangshalbbrücke (201) nach Betrag und/oder Vorzeichen geeignet ist, während der Kommutierungsphase ein Entladen der Kapazität (C1; C2) des zweiten Brückenelements zu bewirken.

9.  Schaltungsanordnung nach einem der vorangegangenen Ansprüche,
    **dadurch gekennzeichnet,**
    **dass** die Ausgangshalbbrücke (202) mit einer Frequenz getaktet wird, die gleich der Frequenz der Eingangshalbbrücke (201) ist, und/oder dass die Frequenz der Eingangshalbbrücke (201) ein ganzzahliges Vielfaches der Frequenz der Ausgangshalbbrücke (202) ist.

10. Schaltungsanordnung nach einem der vorangegangenen Ansprüche,
    **dadurch gekennzeichnet,**
    **dass** mehrere elektrisch parallel zu der Zwischenkreiskapazität (C$_{DC}$) geschaltete Ausgangshalbbrücken (202; 202a..c) vorgesehen sind, die als ein ein- oder mehrphasiger Wechselrichter betrieben werden.

11. Schaltungsanordnung nach Anspruch 10,
    **dadurch gekennzeichnet,**
    **dass** ein bidirektionaler Betrieb vorgesehen ist, wobei die Ausgangshalbbrücken (202; 202a..c; 202a,b) in einem Betriebsmodus als Gleichrichter betrieben werden können.

12. Schaltungsanordnung nach einem der vorangegangenen Ansprüche,
    **dadurch gekennzeichnet,**
    **dass** die Anzahl der Eingangshalbbrücken (201) der Anzahl der Ausgangshalbbrücken (202) entspricht, wobei die Mittelpunkte (M2) der Ausgangshalbbrücken (202) jeweils über einen Koppelschalter (S5; S5') mit genau einem Mittelpunkt (M1) einer Eingangshalbbrücke (201) verbunden sind.

13. Schaltungsanordnung nach einem der vorangegangenen Ansprüche,
    **dadurch gekennzeichnet,**
    **dass** die Mittelpunkte (M1) der Eingangshalbbrücken (201) über jeweils eine Eingangsinduktivität (L1) mit einem Eingangsspannungsanschluss (205) verbunden sind.

14. Schaltungsanordnung nach einem der vorangegangenen Ansprüche,
    **dadurch gekennzeichnet,**
    **dass** die elektrisch parallel zu der Zwischenkreiskapazität (C$_{DC}$) geschalteten Ausgangshalbbrücken (202) über jeweils einen Koppelschalter (S5; S5') mit genau einer Eingangshalbbrücke (201) verbunden sind.

15. Schaltungsanordnung nach einem der vorangegangenen Ansprüche,
    **dadurch gekennzeichnet,**
    **dass** die den Wechselrichter bildenden Ausgangshalbbrücken (202a..c) nach Maßgabe einer 120°-Flattop-Modulation angesteuert werden, so dass die Brückenelemente jeweils einer Ausgangshalbbrücke (202a; 202b; 202c) für ein Drittel der Periode des mittleren Ausgangsstroms (i$_{L2a}$; i$_{L2b}$; i$_{L2c}$) der Ausgangshalbbrücke (202) nicht geschaltet werden.

16. Schaltungsanordnung nach einem der vorangegangenen Ansprüche,
    **dadurch gekennzeichnet,**
    **dass** zwei elektrisch parallel zu der Zwischenkreiskapazität (C$_{DC}$) geschaltete Eingangshalbbrücken (201a,b) vorgesehen sind, deren Mittelpunkte (M1a,b) jeweils über eine Eingangsinduktivität (L1a,b) an einen Pol (205; 206) der Eingangsspannung (U$_E$) angeschlossen sind, wobei eine erste Eingangshalbbrücke (201 a) im Hochsetzstellerbetrieb und eine zweite Eingangshalbbrücke (201 b) im Tiefsetzstellerbetrieb arbeitet, und wobei der Mittelpunkt (M2) der Ausgangshalbbrücke (202) über jeweils einen Koppelschalter (S51; S52) mit den Mittelpunkten (M1a,b) der Eingangshalbbrücken (201a,b) verbunden sind.

17. Schaltungsanordnung nach Anspruch 16,
    **dadurch gekennzeichnet,**
    **dass** einer der Koppelschalter (S51; S52) während einer Kommutierung eines durch den Mittelpunkt (M2) der Ausgangshalbbrücke (202) in Richtung der Ausgangsinduktivität (L2) fließenden Ausgangsstroms ($i_{L2}$) von einem ersten Brückenelement auf ein zweites Brückenelement der Ausgangshalbbrücke (202) eingeschaltet wird, falls der Ausgangsstrom ($i_{L2}$) nach Betrag und/oder Richtung nicht geeignet ist, ein Entladen der Kapazität (C3; C4) des zweiten Brückenelements zu bewirken.

18. Schaltungsanordnung nach Anspruch 16 oder 17,
**dadurch gekennzeichnet,**
**dass** derjenige Koppelschalter (S51; S52) eingeschaltet wird, der den Mittelpunkt (M2) der Ausgangshalbbrücke (202) mit dem Mittelpunkt (M1a; M1b) der Eingangshalbbrücke (201; 201 b) verbindet, die so ausgewählt ist, dass der während der Kommutierung durch die Eingangsinduktivität (L1a; L1b) der Eingangshalbbrücke (201; 201b) in den Mittelpunkt (M1a; M1b) der Eingangshalbbrücke (201 a; 201 b) fließende Eingangsstrom ($i_{L1a}$; $i_{L1b}$) so eingestellt ist, dass eine Differenz zwischen diesem Eingangsstrom ($i_{L1a}$; $i_{L1b}$) und dem Ausgangsstrom ($i_{L2}$) geeignet ist, ein Entladen der Kapazität (C3; C4) des zweiten Brückenelements der Ausgangshalbbrücke (202) zu bewirken.

19. Schaltungsanordnung nach einem der vorangegangenen Ansprüche,
**dadurch gekennzeichnet,**
**dass** die Eingangshalbbrücken (201) als einphasiger oder mehrphasiger Gleichrichter betrieben werden.

20. Schaltungsanordnung nach einem der vorangegangenen Ansprüche,
**dadurch gekennzeichnet,**
**dass** es sich bei dem Schaltelement (S2; D2) des unteren Brückenelements der Eingangshalbbrücke (201) und bei dem Schaltelement (S3; D3) des oberen Brückenelements der Ausgangshalbbrücke (202) jeweils um einen Transistor mit antiparallel geschalteter Freilaufdiode handelt.

21. Schaltungsanordnung nach einem der vorangegangenen Ansprüche,
**dadurch gekennzeichnet,**
**dass** es sich bei dem Schaltelement (S1; D1; D1') des oberen Brückenelements der Eingangshalbbrücke (201) und bei dem Schaltelement (S4, D4; D4') des unteren Brückenelements der Ausgangshalbbrücke (201) jeweils um einen Transistor mit antiparallel geschalteter Freilaufdiode oder um eine Diode handelt, die derart geschaltet ist, dass sie sich in einem Sperrzustand befindet, wenn das Schaltelement (S2, D2; S3; D3) des gegenüberliegenden Brückenelements leitend geschaltet ist.

22. Schaltungsanordnung nach einem der vorangegangenen Ansprüche,
**dadurch gekennzeichnet,**
**dass** der Koppelschalter (S5; S5') wenigstens einen Transistor umfasst, dessen Source- oder Emitteranschluss mit dem Mittelpunkt der Eingangshalbbrücke oder der Ausgangshalbbrücke verbunden ist, wobei eine Treiberschaltung des Transistors anhand eines Bootstrap-Verfahrens gespeist wird.

23. Schaltungsanordnung nach einem der vorangegangenen Ansprüche,
**dadurch gekennzeichnet,**
**dass** die Brückenelemente und die Koppelschalter (S5; S5') in einem Modul untergebracht sind.

24. Schaltungsanordnung nach Anspruch 23,
**dadurch gekennzeichnet,**
**dass** eine Treiberschaltung wenigstens teilweise in das Modul integriert ist.

25. Verfahren zum Steuern einer Schaltungsanordnung zum Umsetzen einer Eingangsspannung ($U_E$) in eine Ausgangsspannung ($U_A$) mit den Schritten:

- Parallelschalten wenigstens einer Ausgangshalbbrücke (202) und wenigstens einer Eingangshalbbrücke (201) zu einer Zwischenkreiskapazität ($C_{DC}$),
- Erstellen jeder Halbbrücke (201; 202) mit Hilfe eines oberen Brückenelements (S1, D1; C1; D1', C1; S3, D3, C3), eines unteren Brückenelements (S2, D2; C2; S4; D4, C4; D4', C4) und eines zugänglichen Mittelpunkts (M1; M2) zwischen dem oberen Brückenelement (S1, D1; C1; D1', C1; S3, D3, C3) und dem unteren Brückenelement (S2, D2; C2; S4; D4, C4; D4', C4), wobei zur Bildung des Brückenelemente jeweils ein Schaltelement (S1, D1; D1'; S2, D2; S3, D3; S4, D4; D4') und eine Kapazität (C1; C2; C3; C4) parallel geschaltet werden,
- Kommutierung eines durch den Mittelpunkt (M1; M2) einer Halbbrücke (201; 202) fließenden Stroms ($i_{L1}$; $i_{L2}$) durch ein Schalten wenigstens eines Schaltelements der Brückenelemente der Halbbrücke (201; 202) von dem unteren Brückenelement auf das obere Brückenelement und umgekehrt,
- Verbinden des Mittelpunkts (M1) der Eingangshalbbrücke (201) über eine Eingangsinduktivität (L1) mit einem Eingangsspannungsanschluss (205),
- Verbinden des Mittelpunkts (M2) der Ausgangshalbbrücke (202) über eine Ausgangsinduktivität (L2) mit einem Ausgangsspannungsanschluss (208), und
- Verbinden des Mittelpunkts (M1) der Eingangshalbbrücke (201) über einen Koppelschalter (S5; S5') mit dem Mittelpunkt (M2) der Ausgangshalbbrücke (202),

wobei ferner bei dem Verfahren bei einer Kommutierung des durch den Mittelpunkt (M1; M2) einer Halbbrücke (201; 202) fließenden Stroms ($i_{L1}$; $i_{L2}$) von einem ersten Brückenelement auf das zweite Brückenelement der Halbbrücke (201; 202) die Brückenelemente während einer Kommutierungsphase in einem Sperrzustand betrieben werden, wobei der Koppelschalter (S5; S5') während einer Kommutierung eines durch den Mittelpunkt (M2) der Ausgangshalbbrücke (202) in die Ausgangsinduktivität (L2) fließenden Ausgangsstroms ($i_{L2}$) von einem ersten Brückenelement auf ein zweites Brückenelement der Ausgangshalbbrücke (202) eingeschaltet wird, wenn der Ausgangsstrom ($i_{L2}$) nach Betrag und/oder Vorzeichen nicht geeignet ist, während der Kommutierungsphase ein Entladen der Kapazität (C3; C4) des zweiten Brückenelements zu bewirken.

## Claims

1. A circuit arrangement for converting an input voltage ($U_E$) into an output voltage ($U_A$)

   - comprising at least one output half-bridge (202) and at least one input half-bridge (201), which are connected in parallel to an intermediate circuit capacitor ($C_{DC}$),
   - whereby each half-bridge (201; 202) has an upper bridge element (S1, D1; C1; D1', C1; S3, D3, C3), a lower bridge element (S2, D2; C2; S4; D4, C4; D4', C4) and an accessible midpoint (M1; M2) between the upper bridge element (S1, D1; C1; D1', C1; S3, D3, C3) and the lower bridge element (S2, D2; C2; S4; D4, C4; D4', C4), whereby the bridge elements comprise a parallel circuit of a switching element (S1, D1; D1'; S2, D2; S3, D3, S4, D4; D4') and a capacitor (C1; C2; C3; C4),
   - whereby a current ($i_{L1}$; $i_{L2}$) that is flowing through the midpoint (M1; M2) of a half-bridge (201; 202) can be commutated from the lower bridge element to the upper bridge element and vice versa by switching at least one switching element of the bridge elements of the half-bridge (201; 202),
   - whereby the midpoint (M1) of the input half-bridge (201) is connected to an input voltage terminal (205) via an input inductor (L1), and
   - whereby the midpoint (M2) of the output half-bridge (202) is connected to an output voltage terminal (208) via an output inductor (L2),

   **characterized in that**
   the midpoint (M1) of the input half-bridge (201) is connected to the midpoint (M2) of the output half-bridge (202) via a coupling switch (S5; S5').

2. The circuit arrangement according to claim 1,
   **characterized in that**,
   during a commutation of the current - which is flowing through the midpoint (M1; M2) of a half-bridge (201; 202) - from a first bridge element to the second bridge element of the half-bridge (201; 202), the bridge elements are operated in a blocking state during a commutation phase.

3. The circuit arrangement according to claim 1 or 2,
   **characterized in that**,
   during a commutation of an output current ($i_{L2}$) - which is flowing through the midpoint (M2) of the output half-bridge (202) into the output inductor (L2) - from a first bridge element to a second bridge element of the output half-bridge (202), the coupling switch (S5; S5') is switched on if the output current ($i_{L2}$) is not suitable in terms of its magnitude and/or its sign to cause a discharging of the capacitor (C3; C4) of the second bridge element.

4. The circuit arrangement according to claim 3,
   **characterized in that**
   an input current ($i_{L1}$) that is flowing through the input inductor (L1) into the midpoint (M1) of the input half-bridge (201) during the commutation is adjusted in such a way that the difference between this input current ($i_{L1}$) and the output current ($i_{L2}$) is suitable in terms of its magnitude and/or its sign to cause a discharging of the capacitor (C3; C4) of the second bridge element.

5. The circuit arrangement according to one of the preceding claims,
   **characterized in that**
   the coupling switch (S5') is switched off when the upper bridge element (S1, D1; C1; D1', C1) of the input half-bridge (201) as well as the lower bridge element (S4; D4, C4; D4', C4) of the output half-bridge (202) are in a conductive state, or when the lower bridge element (S2, D2; C2) of the input half-bridge (201) as well as the upper bridge element (S3, D3, C3) of the output half-bridge (202) are in a conductive state.

6. The circuit arrangement according to one of the preceding claims,
   **characterized in that**
   the coupling switch (S5, S5') is only switched on when the upper bridge elements (S1, D1; C1; D1', C1; S3, D3, C3) of the input half-bridge (201) and of the output half-bridge (202) are in a conductive state or in a blocking state.

7. The circuit arrangement according to one of the preceding claims,
   **characterized in that**
   a commutation of the output current ($i_{L2}$) - which is flowing from the midpoint (M2) of the output half-bridge (202) into the output inductor (L2) - from a first bridge element to the second bridge element of the output half-bridge (202) during which the coupling switch (S5; S5') is switched on, is synchronized with the commutation of the input current ($i_{L1}$) - which is flowing from the input inductor (L1) into the midpoint (M1) of the input half-bridge (201) - from a first bridge element to the second bridge element of the input half-bridge (201) during which the input current ($i_{L1}$) is adjusted in such a way that the difference between the input current ($i_{L1}$) and the output current ($i_{L2}$) is suitable in terms of its magnitude and its sign to cause a discharging of the capacitor (C3; C4) of the second bridge element.

8. The circuit arrangement according to one of the preceding claims,
   **characterized in that**
   a current that is flowing from the input inductor (L1) into the input half-bridge (201) is adjusted in such a way that, during the commutation from a first bridge element to a second bridge element of the input half-bridge (201), it is suitable in terms of its magnitude and/or its sign to cause a discharging of the capacitor (C1; C2) of the second bridge element during the commutation phase.

9. The circuit arrangement according to one of the preceding claims,
   **characterized in that**
   the output half-bridge (202) is clocked at a frequency that is the same as the frequency of the input half-bridge (201), and/or **in that** the frequency of the input half-bridge (201) is an integer multiple of the frequency of the output half-bridge (202).

10. The circuit arrangement according to one of the preceding claims,
    **characterized in that**
    several output half-bridges (202; 202a...c) that are electrically connected in parallel to the intermediate circuit capacitor ($C_{DC}$) are provided which are operated as single-phase or multi-phase inverters.

11. The circuit arrangement according to claim 10,
    **characterized in that**
    a bidirectional operation is provided, whereby the output half-bridges (202; 202a...c; 202a,b) can be operated in one mode of operation as rectifiers.

12. The circuit arrangement according to one of the preceding claims,
    **characterized in that**
    the number of input half-bridges (201) corresponds to the number of output half-bridges (202), whereby the midpoints (M2) of the output half-bridges (202) are each connected to precisely one midpoint (M1) of an input half-bridge (201) via a coupling switch (S5; S5').

13. The circuit arrangement according to one of the preceding claims,
    **characterized in that**
    the midpoints (M1) of the input half-bridges (201) are each connected to an input voltage terminal (205) via an input inductor (L1).

14. The circuit arrangement according to one of the preceding claims,
**characterized in that**
the output half-bridges (202) that are electrically connected in parallel to the intermediate circuit capacitor ($C_{DC}$) are each connected to precisely one input half-bridge (201) via a coupling switch (S5; S5').

15. The circuit arrangement according to one of the preceding claims,
**characterized in that**
the output half-bridges (202a... c) that form the inverter are actuated on the basis of a 120° flat-top modulation, so that the bridge elements of one output half-bridge (202a; 202b; 202c) are not switched for one-third of the period of the mean output current ($i_{L2a1}$; $i_{L2b}$; $i_{L2c}$) of the output half-bridge (202).

16. The circuit arrangement according to one of the preceding claims
**characterized in that**
two input half-bridges (20 1 a,b) that are electrically connected in parallel to the intermediate circuit capacitor ($C_{DC}$) are provided whose midpoints (M1a,b) are each connected to a pole (205; 206) of the input voltage ($U_E$) via an input inductor (L1a,b), whereby a first input half-bridge (201a) functions in step-up converter mode and a second input half-bridge (201b) functions in step-up-converter mode, and whereby the midpoint (M2) of the output half-bridge (202) is connected to the midpoints (M1a,b) of the input half-bridges (20 1 a,b) via a coupling switch (S51; S52).

17. The circuit arrangement according to claim 16,
**characterized in that**,
during a commutation of an output current ($i_{L2}$) - which is flowing through the midpoint (M2) of the output half-bridge (202) in the direction of the output inductor (L2) - from a first bridge element to a second bridge element of the output half-bridge (202), one of the coupling switches (S5; S5') is switched on if the output current ($i_{L2}$) is not suitable in terms of its magnitude and/or its direction to cause a discharging of the capacitor (C3; C4) of the second bridge element.

18. The circuit arrangement according to claim 16 or 17,
**characterized in that**
the coupling switch (S51; S52) that is switched on is the one that connects the midpoint (M2) of the output half-bridge (202) to the midpoint (M1a; M1b) of the input half-bridge (201; 201b), which is selected in such a way that the input current ($i_{L1a}$; $i_{L2b}$) that is flowing through the input inductor (L1a; L1b) of the input half-bridge (201a, 201b) into the midpoint (M1a; M1b) of the input half-bridge (201a, 201b) during the commutation is adjusted in such a way that the difference between this input current ($i_{L1a}$; $i_{L1b}$) and the output current ($i_{L2}$) is suitable to cause a discharging of the capacitor (C3; C4) of the second bridge element of the output half-bridge (202).

19. The circuit arrangement according to one of the preceding claims,
**characterized in that**
the input half-bridge (201) can be operated as single-phase or multi-phase rectifiers.

20. The circuit arrangement according to one of the preceding claims,
**characterized in that**
the switching element (S2; D2) of the lower bridge element of the input half-bridge (201) and the switching element (S3; D3) of the upper bridge element of the output half-bridge (202) are each a transistor with a flyback diode that is connected anti-parallel.

21. The circuit arrangement according to one of the preceding claims,
**characterized in that**
the switching element (S1; D1; D1') of the upper bridge element of the input half-bridge (201) and the switching element (S4; D4; D4') of the lower bridge element of the output half-bridge (201) *[sic]* are each a transistor with a flybackdiode that is connected anti-parallel or a diode that is connected in such a way that it is in a blocking state when the switching element (S2, D2; S3; D3) of the opposite bridge element is connected so as to be conductive.

22. The circuit arrangement according to one of the preceding claims,
**characterized in that**
the coupling switch (S5; S5') comprises at least one transistor whose source or emitter terminal is connected to the midpoint of the input half-bridge or of the output half-bridge, whereby a driver circuit of the transistor is fed by means of the bootstrap method.

**23.** The circuit arrangement according to one of the preceding claims,
**characterized in that**
the bridge elements and the coupling switches (S5; S5') are accommodated in a module.

**24.** The circuit arrangement according to claim 23,
**characterized in that**
a driver circuit is integrated into the module, at least partially.

**25.** A method for actuating a circuit arrangement for converting an input voltage ($U_E$) into an output voltage ($U_A$), comprising the steps:

- connecting at least one output half-bridge (202) and at least one input half-bridge (201) in parallel to an intermediate circuit capacitor ($C_{DC}$),
- establishing each half-bridge (201; 202) by means of an upper bridge element (S1, D1; C1; D1', C1; S3, D3, C3), by means of a lower bridge element (S2, D2; C2; S4; D4, C4; D4', C4) and by means of an accessible midpoint (M1; M2) between the upper bridge element (S1, D1; C1; D1', C1; S3, D3, C3) and the lower bridge element (S2, D2; C2; S4; D4, C4; D4', C4),
- whereby, in order to form the bridge elements, in each case, a switching element (S1, D1; D1'; S2, D2; S3, D3, S4, D4; D4') and a capacitor (C1; C2; C3; C4) are connected in parallel,
- commutating a current ($i_{L1}$; $i_{L2}$) - which is flowing through the midpoint (M1; M2) of a half-bridge (201; 202) - from the lower bridge element to the upper bridge element and vice versa by switching at least one switching element of the bridge elements of the half-bridge (201; 202),
- connecting the midpoint (M1) of the input half-bridge (201) to an input voltage terminal (205) via an input inductor (L1),
- connecting the midpoint (M2) of the output half-bridge (202) to an output voltage terminal (208) via an output inductor (L2), and
- connecting the midpoint (M1) of the input half-bridge (201) to the midpoint (M2) of the output half-bridge (202) via a coupling switch (S5; S5'),

whereby furthermore, with this method, during a commutation of the current ($i_{L1}$; $i_{L2}$) - which is flowing through the midpoint (M1; M2) of a half-bridge (201; 202) - from a first bridge element to the second bridge element of the half-bridge (201; 202), the bridge elements are operated in a blocking state during a commutation phase, whereby during a commutation of an output current ($i_{L2}$) - which is flowing through the midpoint (M2) of the output half-bridge (202) into the output inductor (L2) - from a first bridge element to a second bridge element of the output half-bridge (202), the coupling switch (S5; S5') is switched on if the output current ($i_{L2}$) is not suitable in terms of its magnitude and/or its sign to cause a discharging of the capacitor (C3; C4) of the second bridge element.

**Revendications**

**1.** Circuit pour convertir une tension d'entrée ($U_E$) en une tension de sortie ($U_A$),

- comprenant au moins un demi-pont de sortie (202) et au moins un demi-pont d'entrée (201), lesquels sont montés en parallèle avec une capacité de circuit intermédiaire ($C_{DC}$),
- chaque demi-pont (201 ; 202) comportant un élément de pont supérieur (S1, D1 ; C1 ; D1', C1 ; S3, D3, C3), un élément de pont inférieur (S2, D2 ; C2 ; S4 ; D4, C4 ; D4', C4) et un point central accessible (M1 ; M2) entre l'élément de pont supérieur (S1, D1 ; C1 ; D1', C1 ; S3, D3, C3) et l'élément de pont inférieur (S2, D2 ; C2 ; S4 ; D4, C4 ; D4', C4), les éléments de pont comprenant un montage en parallèle d'un élément de commutation (S1, D1 ; D1' ; S2, D2 ; S3, D3 ; S4, D4 ; D4') et d'une capacité (C1 ; C2 ; C3 ; C4),
- un courant ($i_{L1}$ ; $i_{L2}$) passant par le point central (M1 ; M2) d'un demi-pont (201 ; 202) pouvant être commuté par commutation d'au moins un élément de commutation des éléments de pont du demi-pont (201 ; 202) de l'élément de pont inférieur sur l'élément de pont supérieur et inversement,
- le point central (M1) du demi-pont d'entrée (201) étant relié à un raccordement de tension d'entrée (205) via une inductance d'entrée (L1), et
- le point central (M2) du demi-pont de sortie (202) étant relié à un raccordement de tension de sortie (208) via une inductance de sortie (L2),

**caractérisé en ce que** le point central (M1) du demi-pont d'entrée (201) est relié au point central (M2) du demi-pont de sortie (202) via un commutateur de couplage.

2. Circuit selon la revendication 1, **caractérisé en ce que**, lors d'une commutation du courant passant par le point central (M1 ; M2) d'un demi-pont (201 ; 201) d'un premier élément de pont sur le deuxième élément de pont du demi-pont (201 ; 201), les éléments de pont fonctionnent, pendant une phase de commutation, dans un état bloqué.

3. Circuit selon la revendication 1 ou 2, **caractérisé en ce que** le commutateur de couplage (S5 ; S5') est enclenché, pendant une commutation d'un courant de sortie ($i_{L2}$) passant par le point central (M2) du demi-pont de sortie (202) pour aller à l'inductance de sortie (L2) d'un premier élément de pont sur un deuxième élément de pont du demi-pont de sortie (202), si le courant de sortie ($i_{L2}$) n'est pas propre, de par sa valeur absolue et/ou son signe, à provoquer un déchargement de la capacité (C3 ; C4) du deuxième élément de pont.

4. Circuit selon la revendication 3, **caractérisé en ce qu'**un courant d'entrée ($i_{L1}$) passant par l'inductance d'entrée (L1) pour aller au point central (M1) du demi-pont d'entrée (201) pendant la commutation est régulé de manière telle qu'une différence entre ce courant d'entrée ($i_{L1}$) et le courant de sortie ($i_{L2}$) est propre, de par sa valeur absolue et son signe, à provoquer un déchargement de la capacité (C3 ; C4) du deuxième élément de pont.

5. Circuit selon l'une des revendications précédentes, **caractérisé en ce que** le commutateur de couplage (S5') est coupé si non seulement l'élément de pont supérieur (S1, D1 ; C1 ; D1', C1) du demi-pont d'entrée (201), mais aussi l'élément de pont inférieur (S4, D4 ; C4 ; D4', C4) du demi-pont de sortie (202) se trouvent dans un état conducteur ou si non seulement l'élément de pont inférieur (S2, D2 ; C2) du demi-pont d'entrée (201), mais aussi l'élément de pont supérieur (S3, D3, C3) du demi-pont de sortie (202) se trouvent dans un état conducteur.

6. Circuit selon l'une des revendications précédentes, **caractérisé en ce que** le commutateur de couplage (S5, S5') n'est enclenché que si les éléments de pont supérieurs (S1, D1 ; C1 ; D1', C1 ; S3, D3, C3) du demi-pont d'entrée (201) et du demi-pont de sortie (202) se trouvent respectivement dans un état conducteur ou dans un état bloqué.

7. Circuit selon l'une des revendications précédentes, **caractérisé en ce qu'**une commutation du courant de sortie ($i_{L2}$) allant du point central (M2) du demi-pont de sortie (202) vers l'inductance de sortie (L2) d'un premier élément de pont sur un deuxième élément de pont du demi-pont de sortie (202), lors de laquelle le commutateur de couplage (S5 ; S5') est enclenché, est synchronisée avec la commutation du courant d'entrée ($i_{L1}$) allant de l'inductance d'entrée (L1) vers le point central (M1) du demi-pont d'entrée (201) d'un premier élément de pont sur un deuxième élément de pont du demi-pont d'entrée (201), lors de laquelle le courant d'entrée ($i_{L1}$) est régulé de manière telle que la différence entre le courant d'entrée ($i_{L1}$) et le courant de sortie ($i_{L2}$) est, de par sa valeur absolue et/ou son signe, propre à provoquer un déchargement de la capacité (C3 ; C4) du deuxième élément de pont du demi-pont de sortie.

8. Circuit selon l'une des revendications précédentes, **caractérisé en ce qu'**un courant allant de l'inductance d'entrée (L1) vers le demi-pont d'entrée (201) est régulé de manière telle que, pendant la commutation d'un premier élément de pont sur un deuxième élément de pont du demi-pont d'entrée (201), il est, de par sa valeur absolue et/ou son signe, propre à provoquer un déchargement de la capacité (C1 ; C2) du deuxième élément de pont.

9. Circuit selon l'une des revendications précédentes, **caractérisé en ce que** le demi-pont de sortie (202) est cadencé à une fréquence qui est égale à la fréquence du demi-pont d'entrée (201) et/ou **en ce que** la fréquence du demi-pont d'entrée (201) est un multiple entier de la fréquence du demi-pont de sortie (202).

10. Circuit selon l'une des revendications précédentes, **caractérisé en ce que** sont prévus plusieurs demi-ponts de sortie (202 ; 202a ...c) montés électriquement en parallèle avec la capacité de circuit intermédiaire ($C_{DC}$) et qui fonctionnent en tant qu'onduleur monophasé ou multiphasé.

11. Circuit selon la revendication 10, **caractérisé en ce qu'**est prévu un fonctionnement bidirectionnel, les demi-ponts de sortie (202 ; 202a ...c ; 202a,b) pouvant fonctionner en tant que redresseurs dans un mode de fonctionnement.

12. Circuit selon l'une des revendications précédentes, **caractérisé en ce que** le nombre de demi-ponts d'entrée (201) correspond au nombre de demi-ponts de sortie (202), les points centraux (M2) des demi-ponts de sortie (202) étant reliés à exactement un point central (M1) d'un demi-pont d'entrée (201) respectivement via un commutateur de couplage (S5 ; S5').

**13.** Circuit selon l'une des revendications précédentes, **caractérisé en ce que** les points centraux (M1) des demi-ponts d'entrée (201) sont reliés à un raccordement de tension d'entrée (205) via respectivement une inductance d'entrée (L1).

**14.** Circuit selon l'une des revendications précédentes, **caractérisé en ce que** les demi-ponts de sortie (202) montés électriquement en parallèle avec la capacité de circuit intermédiaire ($C_{DC}$) sont reliés à exactement un demi-pont d'entré (201) via respectivement un commutateur de couplage (S5 ; S5').

**15.** Circuit selon l'une des revendications précédentes, **caractérisé en ce que** les demi-ponts de sortie (202a ...c) formant l'onduleur sont commandés conformément à une modulation flat-top 120°, de sorte que les éléments de pont de respectivement un demi-pont de sortie (202a ; 202b ; 202c) ne sont pas commutés pour un tiers de la période du courant de sortie moyen ($i_{L2a}$ ; $i_{L2b}$ ; $i_{L2c}$) du demi-pont de sortie (202).

**16.** Circuit selon l'une des revendications précédentes, **caractérisé en ce que** sont prévus deux demi-ponts d'entrée (201 a,b) montés électriquement en parallèle avec la capacité de circuit intermédiaire ($C_{DC}$) et dont les points centraux (M1a,b) sont raccordés à un pôle (205 ; 206) de la tension d'entrée ($U_E$) respectivement via une inductance d'entrée (L1a, b), un premier demi-pont d'entrée (201 a) travaillant en mode convertisseur élévateur et un deuxième demi-pont d'entrée (201 b) travaillant en mode convertisseur abaisseur, le point central (M2) du demi-pont de sortie (202) étant relié aux points centraux (M1a,b) des demi-ponts d'entrée (201a,b) via respectivement un commutateur de couplage (S51 ; S52).

**17.** Circuit selon la revendication 16, **caractérisé en ce que** l'un des commutateurs de couplage (S51 ; S52) est enclenché pendant une commutation d'un courant de sortie ($i_{L2}$) passant par le point central (M2) du demi-pont de sortie (202) pour aller vers l'inductance de sortie (L2) d'un premier élément de pont sur un deuxième élément de pont du demi-pont de sortie (202), si le courant de sortie ($i_{L2}$) n'est pas propre, de par sa valeur absolue et/ou son signe, à provoquer un déchargement de la capacité (C3 ; C4) du deuxième élément de pont.

**18.** Circuit selon la revendication 16 ou 17, **caractérisé en ce qu'**est enclenché le commutateur de couplage (S51 ; S52) qui relie le point central (M2) du demi-pont de sortie (202) au point central (M1a ; M1b) du demi-pont d'entrée (201 ; 201 b), lequel est choisi de manière telle que le courant d'entrée ($i_{L1a}$; $i_{L1b}$) passant par l'inductance d'entrée (L1a ; L1 b) du demi-pont d'entrée (201 ; 201 b) pour aller au point central (M1a ; M1b) du demi-pont d'entrée (201 a ; 201 b) pendant la commutation est régulé de manière telle qu'une différence entre ce courant d'entrée ($i_{L1a}$; $i_{L1b}$) et le courant de sortie ($i_{L2}$) est propre à provoquer un déchargement de la capacité (C3 ; C4) du deuxième élément de pont du demi-pont de sortie (202).

**19.** Circuit selon l'une des revendications précédentes, **caractérisé en ce que** les demi-ponts d'entrée (201) fonctionnent en tant que redresseurs monophasés ou multiphasés.

**20.** Circuit selon l'une des revendications précédentes, **caractérisé en ce que** l'élément de commutation (S2 ; D2) de l'élément de pont inférieur du demi-pont d'entrée (201) et l'élément de commutation (S3 ; D3) de l'élément de pont supérieur du demi-pont de sortie (202) sont respectivement un transistor avec diode de roue libre montée en antiparallèle.

**21.** Circuit selon l'une des revendications précédentes, **caractérisé en ce que** l'élément de commutation (S1 ; D1 ; D1') de l'élément de pont supérieur du demi-pont d'entrée (201) et l'élément de commutation (S4, D4 ; D4') de l'élément de pont inférieur du demi-pont de sortie (201) sont respectivement un transistor avec diode de roue libre montée en antiparallèle ou une diode qui est commutée de manière telle qu'elle se trouve dans un état bloqué si l'élément de commutation (S2, D2 ; S3 ; D3) de l'élément de pont opposé est commuté en conduction.

**22.** Circuit selon l'une des revendications précédentes, **caractérisé en ce que** le commutateur de couplage (S5 ; S5') comprend au moins un transistor dont le raccordement source ou d'émetteur est relié au point central du demi-pont d'entrée ou de demi-pont de sortie, un circuit pilote du transistor étant alimenté à l'aide d'un procédé bootstrap.

**23.** Circuit selon l'une des revendications précédentes, **caractérisé en ce que** les éléments de pont et le commutateur de couplage (S5 ; S5') sont logés dans un module.

**24.** Circuit selon la revendication 23, **caractérisé en ce qu'**un circuit pilote est intégré au moins partiellement dans le module.

**25.** Procédé pour commander un circuit pour convertir une tension d'entrée ($U_E$) en une tension de sortie ($U_A$), comportant les étapes :

- monter au moins un demi-pont de sortie (202) et au moins un demi-pont d'entrée (201) en parallèle avec une capacité de circuit intermédiaire ($C_{DC}$) ;
- créer chaque demi-pont (201 ; 202) à l'aide d'un élément de pont supérieur (S1, D1 ; C1 ; D1', C1 ; S3, D3, C3) d'un élément de pont inférieur (S2, D2 ; C2 ; S4 ; D4, C4 ; D4', C4) et d'un point central accessible (M1 ; M2) entre l'élément de pont supérieur (S1, D1 ; C1 ; D1', C1 ; S3, D3, C3) et l'élément de pont inférieur (S2, D2 ; C2 ; S4 ; D4, C4 ; D4', C4), respectivement un élément de commutation (S1, D1 ; D1' ; S2, D2 ; S3, D3 ; S4, D4 ; D4') et une capacité (C1 ; C2 ; C3 ; C4) étant montés en parallèle pour former les éléments de pont ;
- commuter un courant ($i_{L1}$ ; $i_{L2}$) passant par le point central (M1 ; M2) d'un demi-pont (201 ; 202) par commutation d'au moins un élément de commutation des éléments de pont du demi-pont (201 ; 202) de l'élément de pont inférieur sur l'élément de pont supérieur, et inversement ;
- relier le point central (M1) du demi-pont d'entrée (201) à un raccordement de tension d'entrée (205) via une inductance d'entrée (L1) ;
- relier le point central (M2) du demi-pont de sortie (202) à un raccordement de tension de sortie (208) via une inductance de sortie (L2) ; et
- relier le point central (M1) du demi-pont d'entrée (201) au point central (M2) du demi-pont de sortie (202) via un commutateur de couplage (S5 ; S5'),

les éléments de pont, pendant une phase de commutation, fonctionnant en outre, selon ce procédé, dans un état bloqué lors d'une commutation du courant ($i_{L1}$ ; $i_{L2}$) passant par le point central (M1 ; M2) d'un demi-pont (201 ; 202) d'un premier élément de pont sur le deuxième élément de pont du demi-pont (201 ; 202), le commutateur de couplage (S5 ; S5') étant enclenché pendant une commutation d'un courant de sortie ($i_{L2}$) passant par le point central (M2) du demi-pont de sortie (202) pour aller à l'inductance de sortie (L2) d'un premier élément de pont sur un deuxième élément de pont du demi-pont de sortie (202), si le courant de sortie ($i_{L2}$) n'est pas propre, de par sa valeur absolue et/ou son signe, à provoquer un déchargement de la capacité (C3 ; C4) du deuxième élément de pont.

Fig. 1 (Stand der Technik)

Fig. 2

Fig. 3

Fig. 4

EP 1 976 103 B1

Fig. 5

EP 1 976 103 B1

Fig. 6

Fig. 7

Fig. 8

Fig. 9

Fig. 10

EP 1 976 103 B1

Fig. 11

Fig. 12

Fig. 13

EP 1 976 103 B1

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R.W. DEDONCKER ; J.P.LYONS.** The Auxiliary Commutated Pole Converter. *IEEE-IAS Annual Conference,* 1990, 1228-1235